# EUROPEAN PATENT APPLICATION

(11) **EP 4 668 929 A1**
(43) Date of publication of application: **24.12.2025**
(21) Application number: 23922304.3
(22) Date of filing: 25.09.2023
(51) Int. Cl.: H04W 72/04

(54) **DATA RECEIVING APPARATUS AND METHOD, AND DATA SENDING APPARATUS AND METHOD**

(30) Priority: 16.02.2023 WO PCT/CN2023/076599
(71) Applicant: FUJITSU LIMITED, Kawasaki-shi, Kanagawa 211-8588 (JP)
(72) Inventor: ZHAO, Di, Beijing 100022 (CN); ZHANG, Jian, Beijing 100022 (CN); ZHANG, Lei, Beijing 100022 (CN); JIA, Meiyi, Beijing 100022 (CN)
(74) Representative: Haseltine Lake Kempner LLP
(86) International application number: PCT/CN2023/121252
(87) International publication number: WO 2024/169186

(57) **Abstract**

Embodiments of this disclosure provide a data reception apparatus, data transmission apparatus and methods thereof. The method includes: receiving first indication information by a terminal equipment, wherein the first indication information is used to indicate at least one unified transmission configuration indication (TCI) state set of multiple transmission and reception points (TRPs); and determining transmission configuration indication states (TCI states) in the at least one unified TCI state set by the terminal equipment according to the first indication information. Hence, at least one unified TCI state set and TCI states in the at least one unified TCI state set in a multi-TRP scenario may be accurately indicated with a relatively low complexity.

## Description

### Technical Field

This disclosure relates to the field of communication technologies.

### Background

The 3GPP standardization organization has standardized a unified transmission configuration indication (TCI) in the standardization process of Release 17 (Rel-17), wherein the unified TCI in Rel-17 is mainly designed for a scenario of single TRP (sTRP).

With the progress of standardization, multiple TRPs (transmission and reception points, mTRP or multi-TRP) have become an important scenario for 5G NR systems. With transmission based on mTRP, a purpose of improving throughput or reliability may be achieved.

In previous standardization works, transmission of physical downlink shared channels (PDSCHs) based on mTRP has been standardized in Rel 16; and in Rel-17, transmission of physical downlink control channels (PDCCHs), physical uplink shared channels (PUSCHs) and physical uplink control channels (PUCCHs) based on mTRP is standardized, wherein the mTRP transmission includes mTRP transmission based on single DCI (downlink control information) (sDCI) and mTRP transmission based on multiple DCI (mDCI).

It should be noted that the above description of the background art is merely provided for clear and complete explanation of this disclosure and for easy understanding by those skilled in the art. And it should not be understood that the above technical solution is known to those skilled in the art as it is described in the background art of this disclosure.

### Summary

In the scenario of Rel-17 unified TCI for sTRP (single transmission and reception point), a network device configures M (M≥1) (groups of) TCI states for a terminal equipment by using radio resource control (RRC) signaling, activates N (1≤N≤M) (groups of) TCI states in the M TCI states by using media access control (MAC) control elements (CEs), and indicates L (1≤L≤N) (groups of) TCI states in the N TCI states by using DCI, wherein transmission configuration indication (TCI) fields (hereinafter referred to as "TCI fields") in DCI format 1_1 or DCI format 1_2 indicate one or more TCI states, and furthermore, DCI format 1_1 or DCI format 1_2 may assign downlink data, referred to as DCI format 1_1/1_2 with DL assignment, or may not assign downlink data, referred to as DCI format 1_1/1_2 without DL assignment.

A TCI state (TCI in brief) may include or correspond to one or two source reference signals (source RSs). The source reference signal may provide quasi-co-location (QCL) information for downlink reception, referred to as a downlink source reference signal. The source reference signal may provide a reference for uplink transmission spatial filter(UL TX spatial filter), referred to as an uplink source reference signal. The source reference signal may provide beam information for a destination channel/signal. For example, a beam used by a terminal equipment for receiving the destination channel/signal is identical to a beam used by the terminal equipment for receiving the downlink source reference signal. For another example, a beam used by the terminal equipment for transmitting the destination channel/signal is identical to a beam used by the terminal equipment for transmitting the uplink source reference signal. For a further example, the beam used by the terminal equipment for transmitting the destination channel/signal is reciprocal with a beam used by the terminal equipment for receiving the downlink source reference signal, that is, beams in opposite directions are used.

Thus, indication or update of the TCI state actually includes indication or update of beams used by the terminal equipment. The TCI state includes a joint TCI state(joint DL/UL TCI state) and a separate TCI state(separate DL/UL TCI state), wherein the separate TCI state includes a separate DL TCI state and a separate UL TCI state. The "joint" or "separate" in this disclosure refers to UL/DL joint or UL/DL separate. The separate TCI state may be divided into a separate downlink TCI state and a separate uplink TCI state. A downlink TCI state or a first/second downlink TCI state mentioned later belongs to the separate TCI state, and an uplink TCI state or a first/second uplink TCI state mentioned later also belongs to the separate TCI state.

The source reference signal included in the downlink TCI state is a downlink source reference signal, the source reference signal included in the uplink TCI state is an uplink source reference signal, and the source reference signal included in the joint TCI state is both a downlink source reference signal and an uplink source reference signal. The joint TCI state acts on both a downlink beam (receiving beam) and an uplink beam (transmitting beam), in other words, the downlink beam and the uplink beam use the same beam, but directions of the beam are opposite, that is, there exists a reciprocity between the uplink beam and the downlink beam. The downlink TCI state acts only on the downlink beam, and the uplink TCI state acts only on the uplink beam. The uplink beam is also referred to as an uplink transmission spatial filter. A TCI field may indicate the joint TCI state (joint DL/UL TCI), or the TCI field may indicate the downlink TCI state and/or the uplink TCI state (separate DL/UL TCI), and these two modes may be configured by RRC signaling. For the unified TCI in Rel-17, one TCI field indicates one joint TCI state, or indicates one downlink TCI state, or indicates one uplink TCI state, or indicates one downlink TCI state and one uplink TCI state.

A higher-layer parameter unifiedTCI-StateType is used in an NR system to configure whether to use the joint TCI state or the separate TCI state. What is indicated by a TCI field of corresponding DCI (following expressions thereof may be replaced with "a TCI state indicated by DCI") is the joint TCI state or the separate TCI state is dependent on the higher-layer parameter unifiedTCI-StateType: when a value of the parameter unifiedTCI-StateType is 'joint', what is indicated by the DCI is one or more joint TCI states (at most one joint TCI state is indicated in Rel-17, and at most two joint TCI states may be indicated in Rel-18); and when a value of the parameter unifiedTCI-StateType is 'separate', what is indicated by the DCI is one or more separate TCI states.

Multi-TRP (mTRP, multiple transmission and reception point) is an important scenario in a 5G NR system, and with mTRP-based transmission, a purpose of improving throughput or reliability may be achieved. Transmission of PDSCHs based on mTRP is standardized Rel-16, and transmission of PDCCHs, PUSCHs and PUCCHs based on mTRP is standardized Rel-17. Moreover, the mTRP transmission in the current Rel-17 includes mTRP transmission based on sDCI (single DCI) and mTRP transmission based on mDCI (multiple DCI). For the mTRP transmission based on sDCI, one DCI assigns uplink and downlink transmissions of two TRPs, which is more applicable to a case where backhaul between TRPs is relatively ideal; and for the mTRP transmission based on mDCI, two TRPs use two DCI to assign uplink and downlink transmissions of their respective TRPs respectively, which is more applicable to a case where backhaul between TRPs is not ideal.

However, it was found by the inventors that for Rel-18, the existing TCI state activation/deactivation modes are unable to support activation/deactivation of the unified TCI state in the mTRP scenario, hence, how to support activation/deactivation of the unified TCI state in the mTRP scenario has become a problem needing to be solved urgently.

In order to solve at least one of the above problems, embodiments of this disclosure provide a data reception apparatus, data transmission apparatus and methods thereof. Hence, at least one unified TCI state set and TCI states in the at least one unified TCI state set in a multi-TRP scenario may be accurately indicated with a relatively low complexity.

According to one aspect of the embodiments of this disclosure, there is provided a data reception method, applicable to a terminal equipment, the method including:
receiving first indication information, wherein the first indication information is used to indicate at least one unified transmission configuration indication (TCI) state set of multiple transmission and reception points (TRPs); and
determining transmission configuration indication states (TCI states) in the at least one unified TCI state set according to the first indication information.

According to another aspect of the embodiments of this disclosure, there is provided a data transmission apparatus, applicable a network device, the method including:
transmitting first indication information, wherein the first indication information is used to indicate at least one unified transmission configuration indication (TCI) state set of multiple transmission and reception points (TRPs); and
determining a transmission configuration indication state (TCI state) in the at least one unified transmission configuration indication state (TCI state) set by a terminal equipment according to the first indication information.

According to a further aspect of the embodiments of this disclosure, there is provided a data reception apparatus, configured in a terminal equipment, the data reception apparatus including:
a receiving unit configured to receive first indication information, wherein the first indication information is used to indicate at least one unified transmission configuration indication (TCI) state set of multiple transmission and reception points (TRPs); and
a determining unit configured to determine transmission configuration indication states (TCI states) in the at least one unified TCI state set according to the first indication information.

According to still another aspect of the embodiments of this disclosure, there is provided a data transmission apparatus, configured in a network device, wherein the data transmission apparatus includes:
a transmitting unit configured to transmit first indication information, wherein the first indication information is used to indicate at least one unified transmission configuration indication (TCI) state set of multiple transmission and reception points (TRPs);
wherein a terminal equipment determines a transmission configuration indication state (TCI state) in the at least one unified transmission configuration indication state (TCI state) set according to the first indication information.

An advantage of the embodiments of this disclosure exists in that the terminal equipment receives the first indication information, wherein the first indication information is used to indicate at least one unified transmission configuration indication (TCI) state set of multiple transmission and reception points (TRPs); and the terminal equipment determines transmission configuration indication states (TCI states) in the at least one unified TCI state set according to the first indication information. Hence, at least one unified TCI state set and TCI states in the at least one unified TCI state set in a multi-TRP scenario may be accurately indicated with a relatively low complexity.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

### Brief Description of the Drawings

Elements and features depicted in one drawing or embodiment of the invention may be combined with elements and features depicted in one or more additional drawings or embodiments. Moreover, in the drawings, like reference numerals designate corresponding parts throughout the several views and may be used to designate like or similar parts in more than one embodiment.
FIG. 1 is schematic diagram of a communication system of an embodiment of this disclosure;
FIG. 2 is an exemplary diagram of an MAC CE format of the embodiments of this disclosure;
FIG. 3A is an exemplary diagram of uplink and downlink in an mTRP scenario of the embodiments of this disclosure;
FIG. 3B is an exemplary diagram of uplink and downlink in an mTRP scenario of the embodiments of this disclosure;
FIG. 4 is a schematic diagram of a data reception method of the embodiments of this disclosure;
FIG. 5A is an exemplary diagram of first indication information of the embodiments of this disclosure;
FIG. 5B is another exemplary diagram of the first indication information of the embodiments of this disclosure;
FIG. 5C is a further exemplary diagram of the first indication information of the embodiments of this disclosure;
FIG. 6A is still another exemplary diagram of the first indication information of the embodiments of this disclosure;
FIG. 6B is yet another exemplary diagram of the first indication information of the embodiments of this disclosure;
FIG. 6C is yet still another exemplary diagram of the first indication information of the embodiments of this disclosure;
FIG. 7A is yet further another exemplary diagram of the first indication information of the embodiments of this disclosure;
FIG. 7B is still further another exemplary diagram of the first indication information of the embodiments of this disclosure;
FIG. 7C is yet still another exemplary diagram of the first indication information of the embodiments of this disclosure;
FIG. 7D is yet further still another exemplary diagram of the first indication information of the embodiments of this disclosure;
FIG. 8 is a schematic diagram of a data transmission method of the embodiments of this disclosure;
FIG. 9 is a schematic diagram of a data reception apparatus of the embodiments of this disclosure;
FIG. 10 is a schematic diagram of a data transmission apparatus of the embodiments of this disclosure;
FIG. 11 is a schematic diagram of a structure of a network device of the embodiments of this disclosure;
FIG. 12 is a schematic diagram of a terminal equipment of the embodiments of this disclosure;
FIG. 13A is even further another exemplary diagram of the first indication information of the embodiments of this disclosure; and
FIG. 13B is even still another exemplary diagram of the first indication information of the embodiments of this disclosure.

### Detailed Description

These and further aspects and features of this disclosure will be apparent with reference to the following description and attached drawings. In the description and drawings, particular embodiments of the invention have been disclosed in detail as being indicative of some of the ways in which the principles of the invention may be employed, but it is understood that the invention is not limited correspondingly in scope. Rather, the invention includes all changes, modifications and equivalents coming within the spirit and terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and high-speed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, 5G and new radio (NR), etc., and/or other communication protocols that are currently known or will be developed in the future.

In the embodiments of this disclosure, the term "network device", for example, refers to a device in a communication system that accesses a user equipment to the communication network and provides services for the user equipment. The network device may include but not limited to the following devices: a base station (BS), an access point (AP), a transmission reception point (TRP), a broadcast transmitter, a mobile management entity (MME), a gateway, a server, a radio network controller (RNC), a base station controller (BSC), etc.

The base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. And a term "cell" may refer to a base station and/or its coverage area, depending on a context of the term.

In the embodiments of this disclosure, the term "user equipment (UE)" or "terminal equipment (TE) or terminal device" refers to, for example, an equipment accessing to a communication network and receiving network services via a network device. The user equipment may be fixed or mobile, and may also be referred to as a mobile station (MS), a terminal, a subscriber station (SS), an access terminal (AT), or a station, etc.

The terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc., the terminal equipment may also be a machine or a device performing monitoring or measurement. For example, it may include but not limited to a machine-type communication (MTC) terminal, a vehicle mounted communication terminal, an industrial wireless device, a surveillance camera, a device to device (D2D) terminal, and a machine to machine (M2M) terminal, etc.

Moreover, the term "network side" or "network device side" refers to a side of a network, which may be a base station or one or more network devices including those described above. The term "user side" or "terminal side" or "terminal equipment side" refers to a side of a user or a terminal, which may be a UE, and may include one or more terminal equipments described above. "A device" may refer to a network device, and may also refer to a terminal equipment.

Scenarios in the embodiments of this disclosure shall be described below by way of examples; however, this disclosure is not limited thereto.

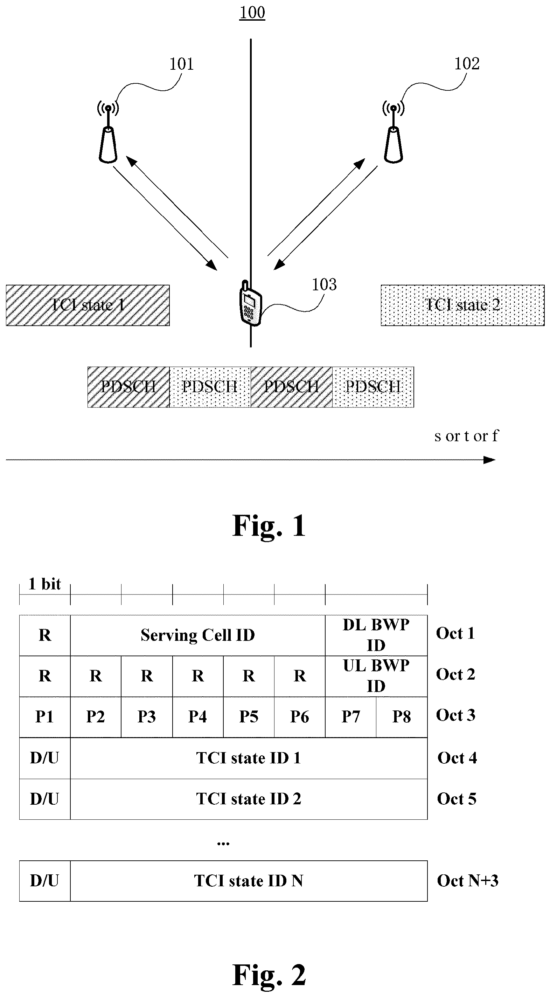

FIG. 1 is a schematic diagram of a communication system of an embodiment of this disclosure, in which a case where a terminal equipment and network devices are taken as examples is schematically shown. As shown in FIG. 1, the communication system 100 may include a first TRP 101, a second TRP 102 and a terminal equipment 103, wherein the first TRP 101 and the second TRP 102 may be network devices. For the sake of simplicity, an example having only two network devices and one terminal equipment is schematically given in FIG. 1. However, the embodiments of this disclosure is not limited thereto.

In the embodiments of this disclosure, existing services or services that may be implemented in the future may be performed between the first TRP 101, the second TRP 102 and the terminal equipment 103. For example, such services may include but not limited to an enhanced mobile broadband (eMBB), massive machine type communication (mMTC), and ultra-reliable and low-latency communication (URLLC), etc.

Transmission of PDSCHs based on mTRP is standardized Rel-16, and transmission of PDCCHs, PUSCHs and PUCCHs based on mTRP is standardized Rel-17. The mTRP transmission includes mTRP transmission based on sDCI (single DCI) and mTRP transmission based on mDCI (multiple DCI). For the mTRP transmission based on sDCI, one DCI assigns uplink and downlink transmissions of two TRPs, which is more applicable to a case where backhaul between TRPs is relatively ideal; and for the mTRP transmission based on mDCI, two TRPs use two DCI to assign uplink and downlink transmissions of their respective TRPs respectively, which is more applicable to a case where backhaul between TRPs is not ideal.

Reception of PDSCHs by the terminal equipment 103 in an mTRP scenario is taken as an example in FIG. 1. For example, the terminal equipment receives two paths of PDSCHs from the first TRP 101 and the second TRP 102, which may be in a form of space division, or a form of time division, or a form of frequency division. The terminal receives the two paths of PDSCHs respectively according to quasi-co-location information provided by TCI state 1 to which the first TRP 101 corresponds and TCI state 2 to which the second TRP 102 corresponds.

As shown in FIG. 1, taking the form of time division as an example, the terminal equipment 103 receives the PDSCHs in a manner of PDSCH repetition, such as receiving transmission of the first TRP 101 at a first slot, and transmitting to the second TRP 102 at a second slot, and so on.

Unified TCI is introduced into Rel-17, and the downlink TCI state or the joint TCI state may at least provide quasi-co-location information for UE-specific PDSCH reception and/or UE-specific PDCCH reception; and the uplink TCI state or the joint TCI state may at least provide quasi-co-location information for UE-specific PUSCH transmission and/or UE-specific PUCCH transmission. The unified TCI scheme in Rel-17 is applicable to a sTRP scenario, in which there are only two transmission links, uplink and downlink, for example, in an MAC CE, at least one group of TCI states is activated and a corresponding TCI state is indicated, and then which group of activated TCI states is used is indicated in a TCI field of the DCI. For example, the MAC CE may activate up to eight groups of TCI states (hereinafter referred to as TCI groups), which correspond respectively to the corresponding TCI codepoints of TCI fields in the DCI, each group of TCI states having one or two TCI states. In a case where a value of a field unifiedTCI-StateType is 'separate', one TCI group may have two TCI states, which may provide QCL references for both uplink and downlink transmissions; one TCI group may only have one DL TCI state, which may provide a QCL reference for downlink transmission; one TCI group may have only one UL TCI state, which may provide a QCL reference for uplink transmission. In a case where the value of the field unifiedTCI-StateType is 'joint', one TCI group has only one joint TCI state, which may provide QCL references for both uplink and downlink transmissions.

FIG. 2 is an example diagram of an MAC CE format of the embodiments of this disclosure.

The MAC CE format for activating/deactivating the unified TCI state in Rel-17 is shown in FIG. 2. Pi (i=1, 2,..., 8) in the figure indicates activating/deactivating an *i-th* group of TCI states. Each group of TCI states has one or two TCI states, for example, a value "0" of Pi indicates that there is one TCI state at a corresponding octet (OCT), such as correspond to one "downlink/joint TCI state" or one "uplink TCI state", and a value "1" of Pi indicates that there are two TCI states (that is, there is one DL TCI state and one UL TCI state). For example, reference may be made to the relevant art for a method for determining Pi and the corresponding Oct, which is not limited in this disclosure. For example, the D/U field in FIG. 2 indicates whether a TCI state to which a TCI state ID in a row where it is located corresponds is "a downlink/joint TCI state" or "an uplink TCI state". For example, when a value of "D/U" is "1", it indicates that the TCI state to which the TCI state ID in the row where it is located corresponds is "a downlink/joint TCI state", and when the value of "D/U" is "0", it indicates that the TCI state to which the TCI state ID in the row where it is located corresponds is "an uplink TCI state".

For example, "Pi (i=1, 2,..., 8) indicates activating/deactivating an *i-th* group of TCI states" may also be expressed as "Pi (i=1, 2,..., 8) indicates whether a TCI codepoint i has one or two TCI states", wherein a "TCI codepoint" is a content indicated by a TCI field in the DCI. For example, the MAC CE may activate at most eight TCI groups (indicated by P1-P8 in FIG. 2), and correspondingly, a TCI field of DCI format 1_1 or DCI format 1_2 has a bitwidth of 3 bits, and there are eight possible encoded values: 000, 001, 010, 011, 100, 101, 110, 111, in which each encoded value may be referred to as one TCI codepoint, and the eight encoded values have eight TCI codepoints, which are TCI codepoint 1, TCI codepoint 2..., and TCI codepoint 8 in turn, corresponding one-to-one with the eight TCI groups in the MAC CE. For example, a TCI state indicated by "TCI codepoint 1" is one TCI state or two TCI states indicated by corresponding P1.

The unified TCI in Rel-17 is only applicable to the sTRP scenario. Taking importance of mTRP into account, there is a need to design a corresponding unified TCI mechanism for the mTRP scenario. 3GPP will standardize the unified TCI of the mTRP in Rel-18. At present, the unified TCI of the mTRP has been determined as one of contents of project in Rel-18, and standardization of Rel-18 is in progress.

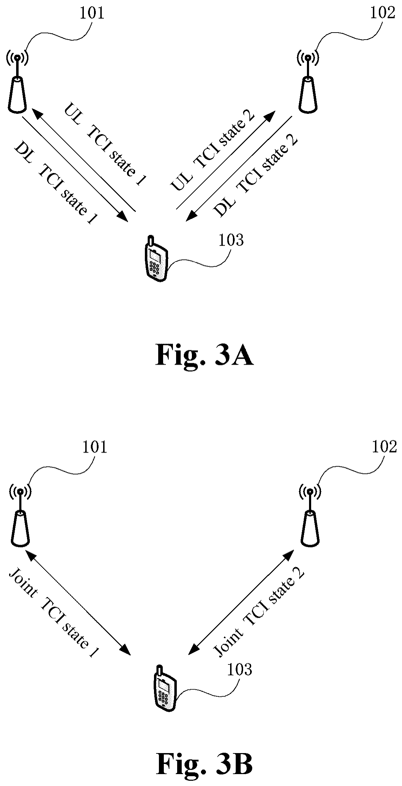

FIG. 3A is an exemplary diagram of uplink and downlink in an mTRP scenario of the embodiments of this disclosure, and FIG. 3B is an exemplary diagram of uplink and downlink in an mTRP scenario of the embodiments of this disclosure.

It was found by the inventors that in the unified TCI scheme in the mTRP scenario in Rel-18, for UE 103, corresponding to each TRP, there is a downlink and an uplink, and there are total four links between the UE and the two TRPs. For example, there is a downlink (hereinafter referred to as a first downlink) and an uplink (hereinafter referred to as a first uplink link) respectively between UE 103 and the first TRP 101, and there is a downlink (hereinafter referred to as a second downlink) and an uplink (hereinafter referred to as a second uplink link) respectively between UE 103 and the first TRP 102, so as to provide QCL references for transmissions of links to which they correspond.

In mTRP transmission, when the value of the higher-layer parameter unifiedTCI-StateType is 'separate', as shown in FIG. 3A, TCI states to which the above four links correspond are {first downlink TCI state (DL TCI state 1), first uplink TCI state (UL TCI state 1), second downlink TCI state (DL TCI state 2), second uplink TCI state (UL TCI state 2)}, which may provide QCL references respectively for the first downlink link, the first uplink link, the second downlink link and the second uplink link. In this scenario, one TCI codepoint in the DCI needs to correspond to four activated TCI states, or correspond to a part of these four activated TCI states. However, the current MAC CE is unable to provide a mechanism for activating/deactivating a TCI state for such a situation. That is, the current mode for activating/deactivating a TCI state is unable to support activation/deactivation of a TCI state in this scenario.

In mTRP transmission, when the value of the higher-layer parameter unifiedTCI-StateType is 'joint', as shown in FIG. 3B, TCI states to which the above four links correspond are {first joint TCI state (joint TCI state 1), second joint TCI state (joint TCI state 2)}, wherein the first joint TCI state may provide QCL references for the first downlink link and the first uplink link, and the second joint TCI state may provide QCL references for the second downlink link and the second uplink link. In this scenario, one TCI codepoint in corresponding one DCI needs to correspond to two activated joint TCI states, or correspond to a part of the two activated joint TCI states. That is, the current mode for activating/deactivating a TCI state is unable to support activation/deactivation of a TCI state in this scenario.

Therefore, the existing TCI state activation/deactivation modes are unable to support activation/deactivation of the unified TCI state in the mTRP scenario, hence, how to support activation/deactivation of the unified TCI state in the mTRP scenario has become a problem needing to be solved urgently.

In order to solve at least one of the above problems, embodiments of this disclosure provide a data reception apparatus, data transmission apparatus and methods thereof.

### Embodiments of a first aspect

The embodiments of this disclosure provide a data reception method, applicable to a terminal equipment side.

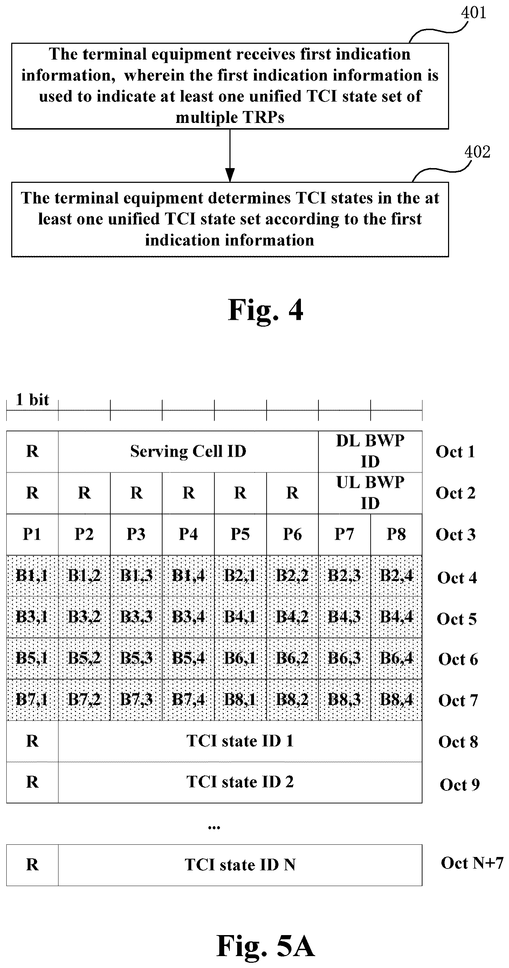

FIG. 4 is a schematic diagram of the data reception method of the embodiments of this disclosure. As shown in FIG. 4, the method includes:
401: the terminal equipment receives first indication information, wherein the first indication information is used to indicate at least one unified transmission configuration indication (TCI) state set of multiple transmission and reception points (TRPs); and
402: the terminal equipment determines transmission configuration indication states (TCI states) in the at least one unified TCI state set according to the first indication information.

Hence, at least one unified TCI state set and TCI states in the at least one unified TCI state set in a multi-TRP scenario may be accurately indicated with a relatively low complexity.

It should be noted that FIG. 4 only schematically illustrates the embodiments of this disclosure; however, this disclosure is not limited thereto. For example, an order of execution of the operations may be appropriately adjusted, and furthermore, some other operations may be added, or some operation therein may be reduced. And appropriate variants may be made by those skilled in the art according to the above contents, without being limited to what is contained in FIG. 4.

In some embodiments, the expression "to indicate at least one unified transmission configuration indication (TCI) state set of multiple TRPs" may be replaced with the expression "to activate/deactivate at least one unified TCI state set of multiple TRPs", and the expression "determining TCI states in the at least one unified TCI state set" may be replaced with the expression "determining to activate/deactivate TCI states in the at least one unified TCI state set".

In some embodiments, the terms "PUSCH" and "PUSCH transmission" may be interchangeable, the terms "PDSCH" and "PDSCH transmission" may be interchangeable, and "DL TCI state" or "UL TCI state" may be indicated by "joint DL/UL TCI state" or by "separate DL/UL TCI state"; ""DL TCI state" may be ""separate DL TCI state" or "joint TCI state"; and "UL TCI state" may be "separate UL TCI state" or "joint TCI state". What described above are examples only, and the embodiments of this disclosure is not limited thereto.

In some embodiments, at least one unified TCI state set of one of the multiple TRPs includes at least one of the following combinations of TCI states: a first downlink TCI state, a second downlink TCI state, a first uplink TCI state, a second uplink TCI state; a first downlink TCI state, a second downlink TCI state, a first uplink TCI state; a first downlink TCI state, a second downlink TCI state, a second uplink TCI state; a first downlink TCI state, a second downlink TCI state; a first downlink TCI state, a first uplink TCI state, a second uplink TCI state; a first downlink TCI state, a first uplink TCI state; a first downlink TCI state, a second uplink TCI state; a first downlink TCI state; a second downlink TCI state, a first uplink TCI state, a second uplink TCI state; a second downlink TCI state, a first uplink TCI state; a second downlink TCI state, a second uplink TCI state; a second downlink TCI state; a first uplink TCI state, a second uplink TCI state; a first uplink TCI state; a second uplink TCI state; a first joint TCI state, a second joint TCI state; a first joint TCI state; or, a second joint TCI state.

In some embodiments, the method further includes: receiving second indication information, wherein the second indication information indicates an applied TCI state according to a TCI state determined by the first indication information.

In some embodiments, the first indication information is carried by an MAC CE. In some embodiments, the second indication information is carried by DCI.

In some embodiment, when a value of the higher-layer parameter unifiedTCI-StateType is 'separate', one corresponding TCI codepoint in the first indication (such as the MAC CE) may activate/deactivate at least one of the following combinations: "a first downlink TCI state, a second downlink TCI state, a first uplink TCI state, a second uplink TCI state; a first downlink TCI state, a second downlink TCI state, a first uplink TCI state; a first downlink TCI state, a second downlink TCI state, a second uplink TCI state; a first downlink TCI state, a second downlink TCI state; a first downlink TCI state, a first uplink TCI state, a second uplink TCI state; a first downlink TCI state, a first uplink TCI state; a first downlink TCI state, a second uplink TCI state; a first downlink TCI state; a second downlink TCI state, a first uplink TCI state, a second uplink TCI state; a second downlink TCI state, a first uplink TCI state; a second downlink TCI state, a second uplink TCI state; a second downlink TCI state; a first uplink TCI state, a second uplink TCI state; a first uplink TCI state; a second uplink TCI state". And when the value of the higher-layer parameter unifiedTCI-StateType is 'joint', one corresponding TCI codepoint in the first indication information (such as the MAC CE) may activate/deactivate at least one of the following combinations: "a first joint TCI state, a second joint TCI state; a first joint TCI state; a second Joint TCI state".

Indicating applied TCI states shall be described below.

For example, the first indication information may be expressed as "an MAC CE for unified TCI state activation/deactivation". For example, "the first indication information indicates (activates) 8 groups of TCI states" may also be expressed as the first indication information indicates activating 8 unified TCI state set, and the first indication information further indicates TCI states specifically included in each group of TCI states (contents specifically indicated by the first indication information shall be described in detail later in this disclosure). On the basis that the MAC CE has activated eight groups of TCI states, the second indication information indicates which TCI state is specifically applied by the terminal equipment. For example, which one of the eight groups of TCI states activated by the first indication information may be indicated by three bits of a TCI field in the DCI, wherein each value of the three bits corresponds to one TCI codepoint.

For example, "000" (which may also be expressed as "TCI codepoint 1") is indicated by the TCI field of the DCI, which means indicating that the terminal equipment applies a first group of TCI states activated in the MAC CE.

For each group of TCI states, optionally, it may also be expressed as for each "unified TCI state set", wherein each "unified TCI state set" may include one of the 18 possible combinations of TCI states described above.

In some embodiment, when the value of the higher-layer parameter unifiedTCI-StateType is 'separate', for example, as shown in FIG. 3A, TCI states needing to be indicated are {a first DL TCI state(DL TCI state 1), a second DL TCI state(DL TCI state 2), a first UL TCI state(UL TCI state 1), a second UL TCI state(UL TCI state 2)}; and when the value of the higher-layer parameter unifiedTCI-StateType is 'joint', for example, as shown in FIG. 3B, TCI states needing to be indicated are: {a first joint TCI state(Joint TCI state 1), a second joint TCI state(Joint TCI state 2)}.

For example, for each "unified TCI state set", a 4-bit bitmap is used to indicate whether each link has a corresponding TCI state in the "unified TCI state set". For example, the 4-bit bitmap corresponds respectively to: {a first DL TCI state, a second DL TCI state, a first UL TCI state, a second UL TCI state}; or, former two bits in the 4-bit bitmap indicate {a first joint TCI state, a second joint TCI state}. For example, a value of "1" of a bit in the 4-bit bitmap indicates that there exists a corresponding TCI state, and a value of "0" of a bit in the 4-bit bitmap indicates that there exists no corresponding TCI state.

For example, when the value of the higher-layer parameter unifiedTCI-StateType is 'separate', a value of the 4-bit bitmap is {1100}, and a combination of TCI states to which "a unified TCI state set" indicated by it corresponds is "a first DL TCI state, a second DL TCI state"; and when the value of the higher-layer parameter unifiedTCI-StateType is 'joint', a value of the 4-bit bitmap is [1100], and a combination of TCI states to which "a unified TCI state set" indicated by it corresponds is "a first joint TCI state, a second joint TCI state". For example, when the value of the higher-layer parameter unifiedTCI-StateType is 'separate', a value of the 4-bit bitmap is [0100], and a combination of TCI states to which 'a unified TCI state set" indicated by it corresponds is "a second DL TCI state"; and when the value of the higher-layer parameter unifiedTCI-StateType is 'joint', a value of the 4-bit bitmap is [0100], and a combination of TCI states to which 'a unified TCI state set" indicated by it corresponds is 'a second joint TCI state".

In some embodiments, the first indication further indicates a specific TCI state in each "unified TCI state set". For example, in addition to indicating the above 4-bit bitmap, the first indication further needs to indicate a TCI state to which each bit in the 4-bit bitmap corresponds.

How the first indication information indicates at least one "unified TCI state set", and a TCI state of each "unified TCI state set" (such as 4-bit bitmap and to which each bit in the 4-bit bitmap corresponds) shall be described below by way of examples.

In some embodiments, the first indication information indicates the at least one unified TCI state set via a first field. In some embodiments, the at least one unified TCI state set is indicated by bitmaps of the first field. In some embodiments, the bitmaps of the first field are arranged in an order of row first and then column or in an order of column first and then row.

In some embodiments, in a case where a first subfield of the bitmaps of the first field is of a first value, the first indication information indicates that there exists no corresponding transmission configuration indication state (TCI state) on a second field to which the first subfield of the bitmaps of the first field corresponds; and in a case where the first subfield of the bitmaps of the first field is of a second value, the first indication information indicates that there exists a corresponding transmission configuration indication state (TCI state) on the second field to which the first subfield of the bitmaps of the first field corresponds.

For example, "the first subfield of the first field" occupies one bit or more bits in the first indication information. For example, in a case where "the first subfield of the first field" occupies one bit, the "first value" may be "0", and the "second value" may be "1"; in a case where "the first subfield of the first field" occupies 4 bits, the "first value" may be "0000", and the "second value" may be other values than "0000". Alternatively, in a case where "the first subfield of the first field" occupies one bit, the "first value" may be "1", and the "second value" may be "0"; in a case where "the first subfield of the first field" occupies multiple bits, the "first value" may be "1111", and the "second value" may be other values than "1111", which are not limited in this disclosure.

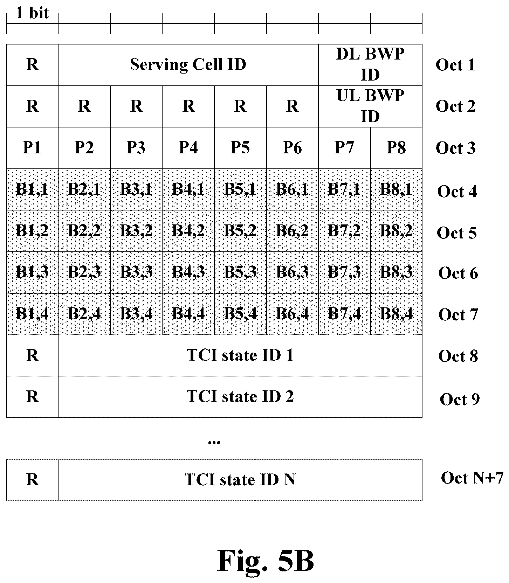

FIG. 5A is an exemplary diagram of the first indication information of the embodiments of this disclosure, and FIG. 5B is another exemplary diagram of the first indication information of the embodiments of this disclosure. For example, the bitmaps of the first field in FIG. 5A are arranged in an order of row first and then column. For example, the bitmaps of the first field in FIG. 5B are arranged in an order of column first and then row.

As shown in FIG. 5A or FIG. 5B, the whole field "Bi, j" corresponds to the first subfield. For example, a value range of "i" is "1-8", corresponding respectively to "i" groups of TCI states or corresponding respectively to "i" unified TCI state sets, and, Bi,1, Bi,2, Bi,3, Bi, 4 may correspond to an *i-th* TCI codepoint. For example, a value range of "j" in "Bi, j" is "1-4", corresponding respectively to {a first DL TCI state, a second DL TCI state, a first UL TCI state, a second UL TCI state} in turn or {a first joint TCI state, a second joint TCI state} in turn, in which each "Bi,1, Bi,2, Bi,3, Bi,4" corresponds to the first subfield on the bitmaps of the first field; wherein fields indicating TCI state identifiers constitute a second field as a whole, such as fields Oct 8-Oct N+7 shown in FIG. 5A or FIG. 5B; where, a meaning of N is, for example, a total number of TCI states to which the first TRP and the second TRP correspond, for example, a maximum value of N is 32; however, it is not limited in this disclosure.

In some embodiments, the first field corresponds to at least one TCI codepoint, wherein a TCI state to which one TCI codepoint corresponds is determined by a TCI state to which at least one first subfield in the first field corresponds.

For example, the first field shown in FIG. 5A or FIG. 5B corresponds to 8 TCI codepoints, wherein a TCI state to which a TCI codepoint i corresponds is determined by a TCI state to which four first subfields in the first field correspond, for example, Bi,1-Bi, 4 correspond to the TCI state of the TCI codepoint i.

For example, taking an *"i-th"* TCI group as an example, table 1 shows all possible combinations of TCI states of Bi,1- Bi,4.

**Table 1**

| Serial number | {Bi,1, Bi,2, Bi,3, Bi,4} | Activated TCI states corresponding to TCI codepoint i |
|---|---|---|
| 1 | 1111 | First DL/joint TCI state, second DL/joint TCI state, first UL TCI state, second UL TCI state |
| 2 | 1110 | First DL/joint TCI state, second DL/joint TCI state, first UL TCI state |
| 3 | 1110 | First DL/joint TCI state, second DL/joint TCI state, second UL TCI state |
| 4 | 1100 | First DL/joint TCI state, second DL/joint TCI state |
| 5 | 1011 | First DL/joint TCI state, first UL/joint TCI state, second UL TCI state |
| 6 | 1010 | First DL/joint TCI state, first UL TCI state |
| 7 | 1001 | First DL/joint TCI state, second UL TCI state |
| 8 | 1000 | First DL/joint TCI state |
| 9 | 0111 | Second DL/joint TCI state, first UL TCI state, second UL TCI state |
| 10 | 0110 | Second DL/joint TCI state, first UL TCI state |
| 11 | 0101 | Second DL/joint TCI state, second UL TCI state |
| 12 | 0100 | Second DL/joint TCI state |
| 13 | 0011 | First UL TCI state, second UL TCI state |
| 14 | 0010 | First UL TCI state |
| 15 | 0001 | Second UL TCI state |
| 16 | 0000 | Non-activated TCI states corresponding to TCI codepoint i |

For example, correspondences between Bi,1, Bi,2, Bi,3, Bi,4 and the first DL/joint TCI state, the second DL/joint TCI state, the first UL TCI state and the second UL TCI state may be adjusted, and orders of TCIs in the third column of the table are adjusted accordingly after the adjustment, which is not limited in this disclosure.

In some embodiments, in the case where the first subfield of the bitmaps of the first field is of the second value, the second field on the first indication information corresponding to the first subfield of the bitmaps of the first field is read, wherein a first subfield of the second field indicates an identification information index of the TCI state.

For example, the first subfield of the second field indicates an identification information index of the TCI state (TCI state ID) corresponding to "Bi,1, Bi,2, Bi,3, Bi,4" . For example, the first subfield of the second field may use 7 bits to indicate the TCI state ID (such as indicate a higher-layer parameter "TCI-StateId"). For example, remaining bits of the second field may be set to be redundant bits (R). For example, as shown in FIG. 5A, the first subfield of the second field starts with a second bit of the second field, and the starting first bit of the second field is set to be a redundant bit. For example, the first subfield of the second field further occupies 6 bits, and so on, which shall not be enumerated herein any further.

For example, the TCI State ID fields in FIG. 5A or FIG. 5B correspond one-to-one to bits with a value of "1" in a "sequence of B1,1, B1,2, B1,3, B1,4, B2,1, B2,2, B2,3, B2,4,..., B8,1, B8,2, B8,3, B8,4" (hereinafter referred to as a sequence of {Bi,j}). For example, a bit with a value of "1" appeared first in the "sequence of B1,1, B1,2, B1,3, B1,4, B2,1, B2,2, B2,3, B2,4,..., B8,1, B8,2, B8,3, B8,4" corresponds to a TCI state ID 1, and a bit with a value of "1" appeared second in the "sequence of B1,1, B1,2, B1,3, B1,4, B2,1, B2,2, B2,3, B2,4,..., B8,1, B8,2, B8,3, B8,4" corresponds to a TCI state ID 2, and so on. For example, if a value of "B1,1, B1,2, B1,3, B1,4" in the "sequence of B1,1, B1,2, B1,3, B1,4, B2,1, B2,2, B2,3, B2,4,..., B8,1, B8,2, B8,3, B8,4" is "0000" and a value of "B2,1, B2,2, B2,3, B2,4" therein is "0100", it indicates that a codepoint 2 corresponding to "B2,1, B2,2, B2,3, B2,4" corresponds to a first TCI state, i.e. TCI state 1.

For example, in a case where a first value of "Bi,1, Bi,2, Bi,3, Bi,4" is "0000", a second field to which "Bi,1, Bi,2, Bi,3, Bi,4" corresponds does not have a TCI state corresponding to "Bi,1, Bi,2, Bi,3, Bi,4"; and in a case where a value of "Bi,1, Bi,2, Bi,3, Bi,4" is a second value (other than "0000"), the second field to which "Bi,1, Bi,2, Bi,3, Bi,4" corresponds has a TCI state corresponding to "Bi,1, Bi,2, Bi,3, Bi,4".

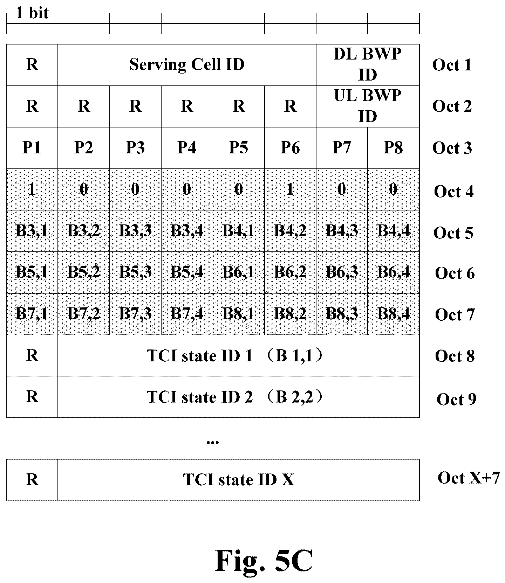

FIG. 5C is a further exemplary diagram of the first indication information of the embodiments of this disclosure. As shown in FIG. 5C, when the value of the higher-layer parameter unifiedTCI-StateType is 'separate', a value of the first subfield "B1,1-B1,4" in the first field is "1000", and the combination of activated TCI states corresponds to "a first downlink TCI state" in a row where sequence number 8 in Table 1 is located, and then according to a first subfield "TCI state ID 1 (B1,1) " on a second field (Oct 7), a TCI state ID 1 to which "the first downlink TCI state" corresponds is obtained, wherein (B1,1) in the "TCI state ID 1 (B1,1)" is for better illustrating the correspondence between TCI state IDs and Bi,j, and has no physical significance, that is, the TCI state ID to which B1,1 corresponds is TCI state ID1. For example, the value of the first subfield "B2.1-B2.4" in the first field is "0100", and the combination of activated TCI states corresponds to "a second downlink TCI state" in a row where sequence number 12 in Table 1 is located, and then according to a first subfield "TCI state ID 2 (B2.2)" on a second field (Oct 8), a TCI state ID 2 to which "the second downlink TCI state" corresponds is obtained, wherein (B2,2) in "TCI state ID 2 (B2.2) " also has no physical significance. For example, specific values and contents of other fields, such as B3,1 in FIG. 5B, shall not be enumerated herein any further. For example, X in FIG. 5 C is an integer less than or equal to N (corresponding to N in FIG. 5 A), which denotes a maximum index of a corresponding TCI state ID in a currently activated TCI group.

For example, in a case where TCI field indicates "000" (corresponding to TCI codepoint 1) in the second indication information indicates the terminal equipment to apply "the first downlink TCI state" and the corresponding "TCI state ID 1 (B1,1)", such as applying a corresponding TCI state to downlink of the first TRP.

Thus, at least one unified TCI state set and the TCI states in the at least one unified TCI state set in the multi-TRP scenario may be determined.

For example, reference may be made to the relevant art for such other fields shown in FIG. 5A, FIG. 5B and FIG. 5C as "a serving cell ID", "a DL BWP ID", "a UL BWP ID", and "Pi", etc., which are not limited in this disclosure. Moreover, in this disclosure, the first indication information may include all the fields shown in FIG. 5A, FIG. 5B and FIG. 5C, or may not include some of the fields shown in FIG. 5A, FIG. 5B and FIG. 5C. For example, the first indication information in this disclosure may not include the field "Pi", which is not limited in this disclosure, and shall not be enumerated herein any further.

In some embodiments, the first indication information indicates the at least one unified TCI state set via a third field and a fourth field. In some embodiments, the at least one unified TCI state set is indicated by bitmaps of the third field and a first subfield of the fourth field jointly.

In some embodiment, the bitmaps of the third field are arranged in an order of row first and then column or in an order of column first and then row; and the first subfield of the fourth field is at least one starting bit of the fourth field.

For example, "the first subfield of the third field" and "the first subfield of the fourth field" occupy one bit or more bits in the first indication information. For example, in a case where "the first subfield of the third field" occupies one bit, the "first value" may be "0", and the "second value" may be "1", and in a case where "the first subfield of the third field" occupies three bits, the "first value" may be "000", and the "second value" may be a value other than "000". Alternatively, in the case where "the first subfield of the third field" occupies one bit, the "first value" may be "1", and the "second value" may be "0", and in the case where "the first subfield of the third field" occupies three bits, the "first value" may be "111", and the "second value" may be a value other than "111", which is not limited in this disclosure.

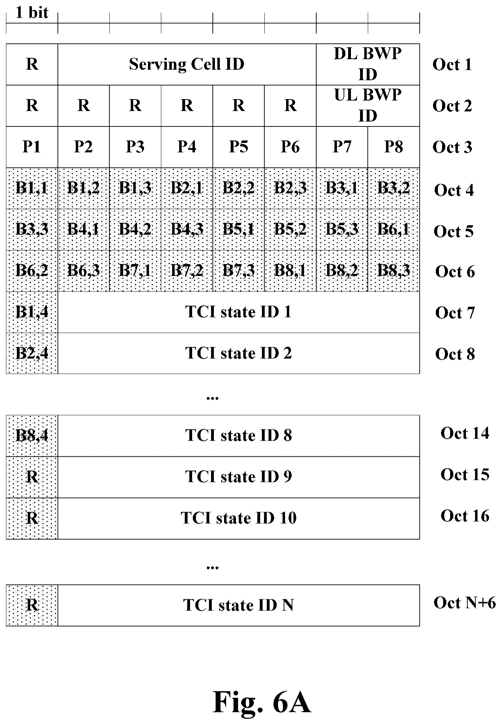

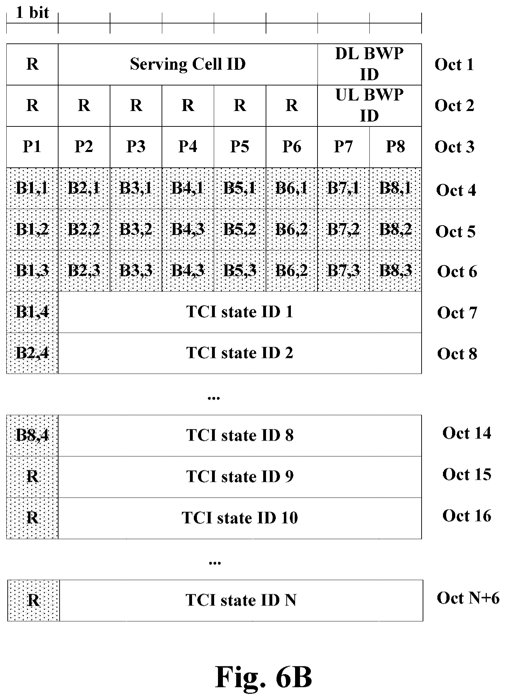

FIG. 6A is still another exemplary diagram of the first indication information of the embodiments of this disclosure, and FIG. 6B is yet another exemplary diagram of the first indication information of the embodiments of this disclosure. For example, the bitmaps of the third field in FIG. 6A are arranged in an order of row first and then column. For example, the bitmaps of the third field in FIG. 6B are arranged in an order of column first and then row.

For example, as shown in FIG. 6A or FIG. 6B, Bi,j in fields Oct 4-Oct 6 constitute the third field, fields Oct 7-Oct N+6 constitute the fourth field, and a part of starting bits of each field in fields Oct 7-Oct N+6 constitutes the "first subfield of the fourth field". For example, as shown in FIG. 6A or FIG. 6B, "the first subfield of the fourth field" occupies only starting bits in fields Oct 7-Oct 14, and starting bits in fields Oct 15-Oct N+6 are still filled with redundant bits (R), wherein the bit filling (R) and bits other than the starting bits in each field from Oct 7 to Oct N+6 constitute the "second subfield of the fourth field".

In some embodiments, when the first subfield on the bitmaps of the third field is of a first value, the first indication indicates that there is no corresponding TCI state on the second subfield of the fourth field to which the first subfield on the bitmaps of the third field corresponds, and when the first subfield on the bitmaps of the third field is of a second value, the first indication indicates that there is a corresponding TCI state on the second subfield of the fourth field to which the first subfield on the bitmaps of the third field corresponds; and/or, when the first subfield of the fourth field is of a first value, the first indication indicates that there is no corresponding TCI state on the second subfield of the fourth field to which the first subfield of the fourth field corresponds, and when the first subfield of the fourth field is of a second value, the first indication indicates that there is a corresponding TCI state on the second subfield of the fourth field to which the first subfield of the fourth field corresponds.

In some embodiment, in the case where the first subfield on the bitmaps of the third field is of a second value and/or the first subfield of the fourth field is of a second value, the second subfield of the fourth field to which the first subfield on the bitmaps of the third field corresponds is read and/or the second subfield of the fourth field to which the first subfield of the fourth field corresponds is read, wherein the second subfield of the fourth field indicates an identification information index of the TCI state.

For example, in a case where the first subfield on the bitmaps of the third field in FIG. 6A, such as "B1,j" (j=1-3) is of a first value "000", there is no corresponding TCI state on the second subfield of the fourth field to which "B1,j" corresponds, in other cases where the first subfield on the bitmaps of the third field is of a second value other than "000", there is a corresponding TCI state on the second subfield of the fourth field to which "B1,j" corresponds, and then the second subfield of the fourth field to which "B1,j" corresponds is read, wherein the second subfield of the fourth field indicates an identification information index of the TCI state to which "B1,j" corresponds; and/or, for example, in a case where the first subfield "B1,4" of the fourth field is of a first value "0", there is no corresponding TCI state on the second subfield of the fourth field to which "B1,4" corresponds, in a case where the first subfield is of a second value "1", there is a corresponding TCI state on the second subfield of the fourth field to which "B1,4" corresponds, and then the second subfield of the fourth field to which "B1,4" corresponds is read, wherein the second subfield of the fourth field indicates an identification information index of the TCI state to which "B1,4" corresponds.

In some embodiments, the third field and the fourth field correspond to at least one TCI codepoint, wherein a TCI state to one TCI codepoint corresponds is determined by the TCI state to which the first subfield of the third field corresponds and/or the TCI state to which the first subfield of the fourth field corresponds.

For example, similar to the above embodiment, Bi,1-Bi,4 correspond to the TCI codepoint i. For example, reference maybe made to the examples in FIGs. 5A-5C for specific values of "Bi,j" and "the TCI state ID", which shall not be repeated herein any further.

As shown in FIG. 6A or FIG. 6B, a difference from the examples in FIGs. 5A-5C exists in that Bi,4 in each group of Bi,1-Bi,4 are set in the first subfield of the fourth field, thereby further reducing overhead of 1 bit.

For example, if a total number N of TCI state groups to be activated in current first indication information is greater than or equal to 8, eight Bi,4 may be fully indicated, and if a total number N of TCI states to be activated in a current MAC CE is less than 8, values of former N Bi,4 need only to be indicated, that is, indicating B1,4, B2,4, ..., BN,4 sequentially.

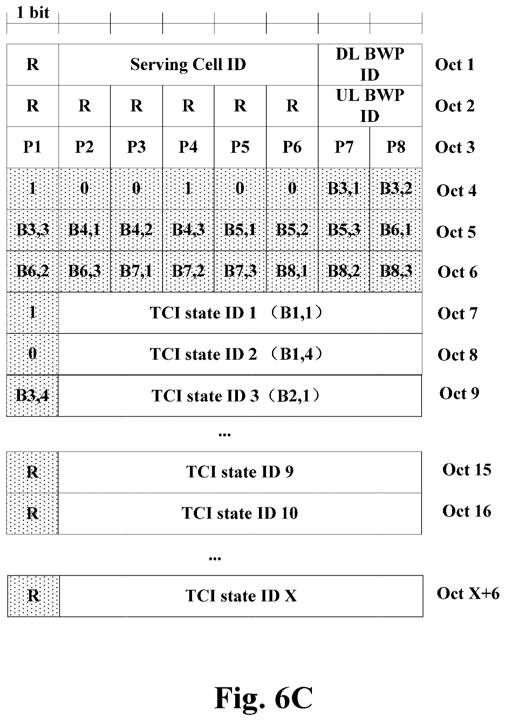

FIG. 6C is yet still another exemplary diagram of the first indication information of the embodiments of this disclosure. As shown in FIG. 6C, when the value of the higher-layer parameter unifiedTCI-StateType is 'separate', that values of "B1,1-B1,4" of the first subfield in the third field and the first subfield in the fourth field are "1001" and values of "B2,1-B2,4" of the first subfield in the third field and the first subfield in the fourth field are "1000" are taken as examples. A combination of TCI states activated by "B1,1-B1,4" of the first subfield in the third field and the first subfield in the fourth field with values of "1001" corresponds to "the first downlink TCI state, the second uplink TCI state" in a row where a sequence number 7 in Table 1 is located, and then according to the second subfield "TCI state ID 1 (B1,1)" on the fourth field (Oct 7), TCI state ID 1 to which "the first downlink TCI state" corresponds is obtained; moreover, according to the value of "1" of the first subfield B1,4 of the fourth field, a second subfield "TCI state ID 2 (B1,4)" on a corresponding fourth field (Oct 8) is read to obtain the TCI state ID 2 to which "the second uplink TCI state" corresponds, and so on. For example, specific values and contents of such other fields as B3,1 in FIG. 6C shall not be enumerated herein any further. Similar to FIG. 5C, (B1,1) in "TCI state ID 1 (B1,1)" shown in FIG. 6C is only for the purpose of corresponding to a relationship between the TCI state IDs and Bij, and an identifier of the TCI state to which it corresponds is still "TCI state ID 1". For example, X in FIG. 6C is an integer less than or equal to N (corresponding to N in FIG. 6A), which denotes a maximum index of a corresponding TCI state ID in current activated TCI groups.

For example, in the case where the TCI field indicates "000" (corresponding to TCI codepoint 1), the second indication information indicates the terminal equipment to apply "the first downlink TCI state, the second uplink TCI state" and corresponding "TCI state ID 1 (B1,1), TCI state ID 2 (B1,4) ", such as applying a corresponding TCI state to the downlink of the first TRP.

Thus, at least one unified TCI state set and the TCI states in the at least one unified TCI state set in the multi-TRP scenario may be determined.

In some embodiments, the first indication information indicates the at least one unified TCI state set via a fifth field and a sixth field.

In some embodiment, in a case where a first subfield on bitmaps of the fifth field is of a first value, the first indication information indicates that there exist a first number of TCI states on a seventh field to which the first subfield on the bitmaps of the fifth field corresponds; and in a case where the first subfield on the bitmaps of the fifth field is of a second value, the first indication information indicates that there exist a second number of TCI states on the seventh field to which the first subfield on the bitmaps of the fifth field corresponds.

In some embodiment, the seventh field on the first indication information corresponding to the first subfield on the bitmaps of the fifth field is read, wherein the first subfield of the seventh field indicates an uplink direction or a downlink direction or a joint state, and a second subfield of the seventh field indicates the identification information index of the TCI state.

In some embodiment, in a case where a first subfield on bitmaps of the sixth field is of a first value, the first indication information indicates that there exist a first number of TCI states on an eighth field to which the first subfield on the bitmaps of the sixth field corresponds; and in a case where the first subfield on bitmaps of the sixth field is of a second value, the first indication information indicates that there exist a second number of TCI states on the eighth field to which the first subfield on the bitmaps of the sixth field corresponds.

In some embodiment, a first subfield and a second subfield of the eighth field on the first indication information corresponding to the first subfield on the bitmaps of the sixth field are read, wherein the first subfield of the eighth field indicates an uplink direction or a downlink direction or a joint state, and the second subfield of the eighth field indicates the identification information index of the TCI state.

For example, the "sixth field" and "eighth field" described above in this disclosure are newly-added fields relative to an existing MAC CE. For example, relative to the MAC CE shown in FIG. 2, "sixth field" and "eighth field" are newly added, the "fifth field" and the "seventh field" may reuse the Pi field and the corresponding TCI state ID field in the MAC CE shown in FIG. 2, which is not limited in this disclosure.

For example, "the first subfield of the fifth field" and "the first subfield of the sixth field" occupy one bit or more bits in the first indication information, and in a case where "the first subfield of the fifth field" and "the first subfield of the sixth field" occupy one bit, "the first value" may be "0" , and "the second value" may be "1", for example, "the first number" is "1", and "the second number" is "2", which is not limited in this disclosure.

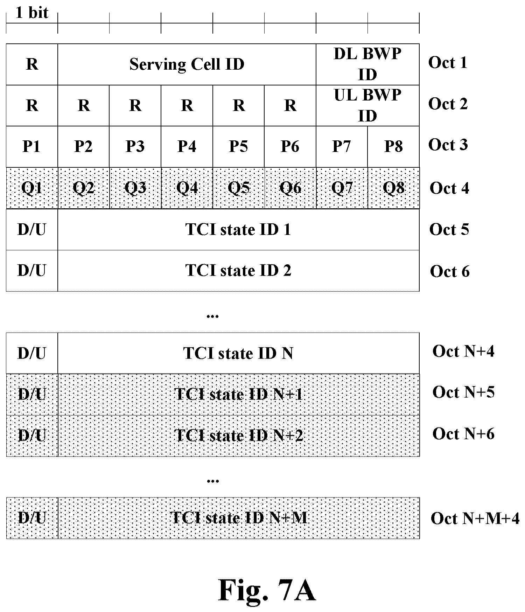

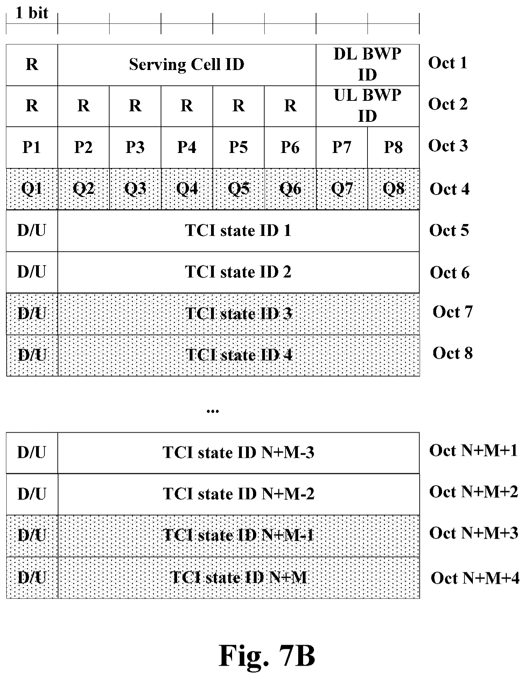

FIG. 7A is yet further another exemplary diagram of the first indication information of the embodiments of this disclosure, and FIG. 7B is still further another exemplary diagram of the first indication information of the embodiments of this disclosure.

For example, as shown in FIG. 7A or FIG. 7B, the overall fields P1-P8 correspond to "the fifth field", and the overall fields Q1-Q8 correspond to "the sixth field", wherein each bit "Pi" in P1-P8 corresponds to "the first subfield of the fifth field", and each bit "Qi" in Q1-Q8 corresponds to "the first subfield of the sixth field".

For example, fields Oct 5-Oct N+4 shown in FIG. 7A are "the seventh field", and fields Oct N+5-Oct N+M+4 are "the eighth field", wherein a meaning of N is, for example, a total number of TCI states to which the first TRP corresponds, and a meaning of M is, for example, a total number of TCI states to which the second TRP corresponds. For example, a maximum value of N is 32, which is not limited in this disclosure. Wherein, the fields of "the seventh field" and "the eighth field" are arranged in an order of PI-P8 first and then Q1-Q8; or, the fields Oct 5, Oct 6, Oct N+M+1, and Oct N+M+2, etc., shown in FIG. 7B, are "the seventh field", and the fields Oct 7, Oct 8, Oct N+M-1, and Oct N+M, etc., shown in FIG. 7B are "the eighth field", wherein the fields of "the seventh field" and "the eighth field" are arranged in an order of PI first and then Q1, P2, and Q2. For example, N=M=8, and N and M may also be other values, which are not limited in this disclosure.

For example, as shown in FIG. 7A and FIG. 7B, a starting bit ("D/U") of each field in the fields Oct 5-Oct N+M+4 corresponds to "the first subfield of the seventh field" or "the first subfield of the eighth field", and each field in the fields Oct 5-Oct N+M+4 other than the starting bit ("TCI state ID"), such as with a size of 7 bits, correspond to "the second subfield of the seventh field" or "the second subfield of the eighth field".

In some embodiment, "the first subfield of the seventh field" indicates an uplink direction or a downlink direction or a joint state, and "the second subfield of the seventh field" indicates an identification information index of the TCI state. For example, "the first subfield of the eighth field" indicates an uplink direction or a downlink direction or a joint state, and "the second subfield of the eighth field" indicates an identification information index of the TCI state.

For example, in a case where "the first subfield of the seventh field" or "the first subfield of the eighth field" corresponds to having a value "1" in the field "D/U", it indicates "a downlink/joint TCI state", and in a case where "the first subfield of the seventh field" or "the first subfield of the eighth field" corresponds to having a value "0" in the field "D/U", it indicates "an uplink TCI state".

For example, in a case where the first subfield on the bitmaps of the fifth field is of a first value, for example, a value of P1 is "0", it indicates that there is one TCI state on the seventh field to which P1 corresponds; for example, there is one downlink/joint TCI state, or there is one uplink TCI state, and the second subfield of the seventh field is read to obtain a TCI state ID to which "one downlink/joint TCI state or one uplink TCI state" corresponds; and in a case where the first subfield on the bitmaps of the fifth field is of a second value, for example, a value of P1 is "1", it indicates that there are two TCI states, one downlink/joint TCI state and one uplink TCI state, on the seventh field to which P1 corresponds, and the second subfield of the seventh field is read to obtain a TCI state ID to which "one downlink TCI state and one uplink TCI state" corresponds respectively.

In some embodiments, in a case where the first subfield on the bitmaps of the sixth field is of a first value, for example, a value of Q1 is "0", it indicates that there is one TCI state on the eighth field to which Q1 corresponds, for example, there is one downlink/joint TCI state, or there is one uplink TCI state, and the second subfield of the eighth field is read to obtain a TCI state ID to which "one downlink/joint TCI state, or one uplink TCI state" corresponds; and in a case where the first subfield on the bitmaps of the sixth field is of a second value, for example, a value of Q1 is "1", it indicates that there are two TCI states, one downlink TCI state and one uplink TCI state, on the eighth field to which Q1 corresponds, and the second subfield of the eighth field is read to obtain TCI state IDs to which "one downlink TCI state and one uplink TCI state" correspond respectively. For example, when the value of Q1 is "0", "there is one TCI state on the eighth field" may also be expressed as "one TCI state field is added to the eighth field relative to the seventh field", etc., which is not limited in this disclosure.

For example, Pi and Qi jointly indicate the *i-th* group of TCI states to which TCI codepoint i corresponds. For example, Pi corresponds to {a first downlink TCI state, a first uplink TCI state} or {a first joint TCI state} of the first TRP 101, and Qi corresponds to {a second downlink TCI state, a second uplink TCI state} or {a second joint TCI state} of the second TRP 101.

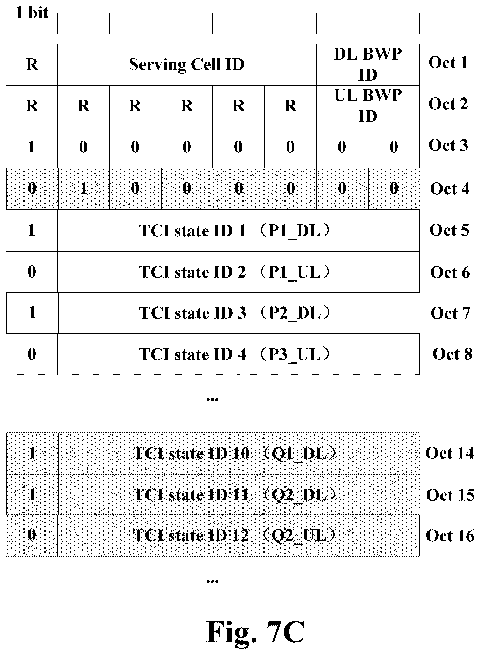

FIG. 7C is yet still another exemplary diagram of the first indication information of the embodiments of this disclosure, in which that the fields of "the seventh field" and "the eighth field" are sequentially arranged in an order of P1-P8 first and then Q1-Q8 is taken as an example. For example, P1-P8 are sequentially arranged as "10000000", and Q1-Q8 are sequentially arranged as "01000000", wherein in the case where the value of P1 is "1", when a value of first one of "first subfields of the seventh field" (a starting bit of field Oct 5) is "1", a downlink TCI state of "a corresponding second subfield of the seventh field" corresponding to P1 is "TCI state ID 1 (P1_DL)", and when a value of second one of "first subfields of the seventh field" (a starting bit of field Oct 6) is "0", an uplink TCI state of "a corresponding second subfield of the seventh field" corresponding to P1 is "TCI state ID 2 (P1_UL)". In a case where a value of Q1 is "0", according to a case where a value of "a first subfield of the eighth field" (a starting bit of a field Oct 14) is "1", a downlink TCI state of a corresponding "second subfield of the eighth field" corresponding to Q1 is "TCI state ID 10 (Q1_DL)". As shown in FIG. 7C, P1 and Q1 jointly denote a case of "a first downlink TCI state, a second downlink TCI state, a first uplink TCI state" i.e. corresponding to the case where {Bi,1, Bi,2, Bi,3, Bi,4} is "1110" in Table 1. Similar to FIG. 5C, (P1_DL) in "TCI state ID 1 (P1_DL)" shown in FIG. 7C is for the purpose of corresponding to a relationship among TCI state IDs and Pi and uplink and downlink TCI states of Pi, and an identifier of a TCI state to which it corresponds is still "TCI state ID 1".

For example, in the case where the TCI field indicates "000" (corresponding to TCI codepoint 1), the second indication information indicates the terminal equipment to apply "a first downlink TCI state, a second downlink TCI state, a first uplink TCI state" and corresponding "TCI state ID 1 (P1-DL), TCI state ID 2 (P1-UL), TCI state ID 10 (Q1-DL) ".

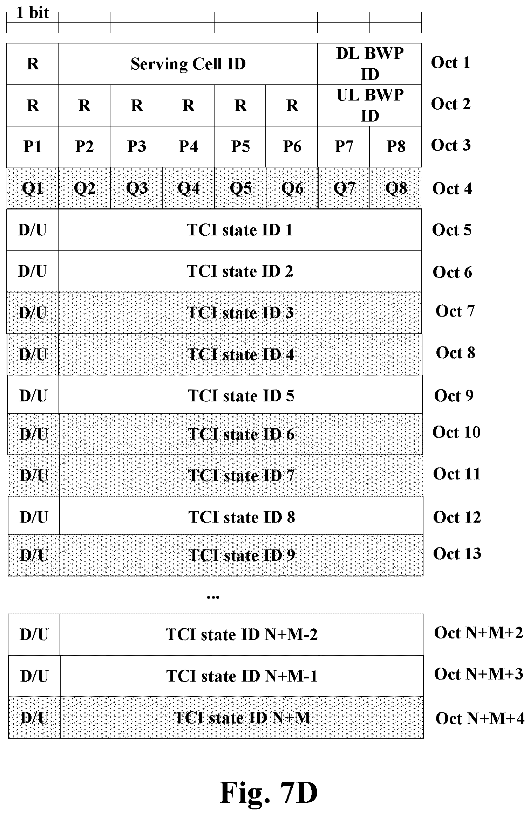

FIG. 7D is yet further still another exemplary diagram of the first indication information of the embodiments of this disclosure. For example, in the fields shown in FIG. 7D, Oct 5, Oct 6, Oct 9, Oct 12, Oct N+M+2, Oct N+M+3 correspond to "the seventh field", Oct 7, Oct 8, Oct 10, Oct 11, Oct 13, Oct N+M+4 correspond to "the eighth field", wherein the fields of "the seventh field" and "the eighth field" are sequentially arranged in an order of P1 first and then Q1, P2, Q2. For example, values of P1, P2, P3 and P8 in FIG. 7D are 1, 0, 0 and 1 respectively, hence, corresponding to first TRP 101, two, one, one and two TCI states are respectively activated on TCI codepoint 1, TCI codepoint 2, TCI codepoint 3 and TCI codepoint 8, and corresponding TCI state IDs are "TCI state ID 1 and TCI state ID 2" ,"TCI state ID 5"," TCI state ID 8", "TCI state ID N+M-2 and TCI state ID N+M-1", respectively. For example, in FIG. 7D, values of Q1, Q2, Q3 and Q8 are 1, 1, 0 and 1, respectively, hence, corresponding to second TRP 102, two, two, one and two TCI states are respectively activated on TCI codepoint 1, TCI codepoint 2, TCI codepoint 3 and TCI codepoint 8, and corresponding TCI state IDs are "TCI state ID 3 and TCI state ID 4", "TCI state ID 6 and TCI state ID 7", "TCI state ID 9", "TCI state ID N+M", respectively. For example, reference may be made to the example in FIG. 7C for a correspondence between the TCI state IDs and the uplink and downlink TCI states in Pi and Qi, which shall not be repeated here in any further.

Thus, at least one unified TCI state set and the TCI states in the at least one unified TCI state set in the multi-TRP scenario may be determined.

For example, reference may be made to the relevant art for other fields shown in FIG. 7A, FIG. 7B, FIG. 7C and FIG. 7D, such as "Serving Cell ID" , "DL BWP ID" , "UL BWP ID" , and "Pi" , etc., which are not limited in this disclosure. Moreover, in this disclosure, the first indication information may include all the fields shown in FIGs. 7A, 7B, 7C and 7D, or may not include some of the fields shown in FIGs. 7A, 7B, 7C and 7D. For example, the first indication information in this disclosure may not include the field "Pi", which is not limited in this disclosure and shall not be enumerated herein any further.

In some embodiments, that the first indication information is carried by an MAC CE includes that: the MAC CE includes a first MAC CE and/or a second MAC CE.

In some embodiment, the terminal equipment further receives configuration information, and in a case where a value of the configuration information is 'separate', the first indication information is carried by the first MAC CE, and in a case where a value of the configuration information is 'joint', the first indication information is carried by the second MAC CE.

For example, the configuration information is a higher-layer parameter unifiedTCI-StateType, and when a value of the parameter unifiedTCI-StateType is 'separate', the first indication information is carried by the first MAC CE, and when a value of the parameter unifiedTCI-StateType is 'joint', the first indication information is carried by the second MAC CE.

In some embodiments, the first MAC CE and the second MAC CE may be identical or different.

For example, the configuration information is the higher-layer parameter unifiedTCI-StateType, when a value of the parameter unifiedTCI-StateType is 'separate', the first indication information is carried by the first MAC CE, and when a value of the parameter unifiedTCI-StateType is 'joint', the first indication information is carried by the second MAC CE identical to the first MAC CE.

For example, in the case where the first MAC CE and the second MAC CE are identical, the first MAC CE and the second MAC CE are both one of the MAC CEs shown in FIG. 5A, FIG. 5B, FIG. 5C, FIG. 6A, FIG. 6B, FIG. 6C, FIG. 7A, FIG. 7B, FIG. 7C and FIG. 7D.

For example, the configuration information is the higher-layer parameter unifiedTCI-StateType, and when a value of the parameter unifiedTCI-StateType is 'separate', the first indication information is carried by the first MAC CE; and when a value of the parameter unifiedTCI-StateType is 'joint', the first indication information is carried by the second MAC CE different from the first MAC CE.

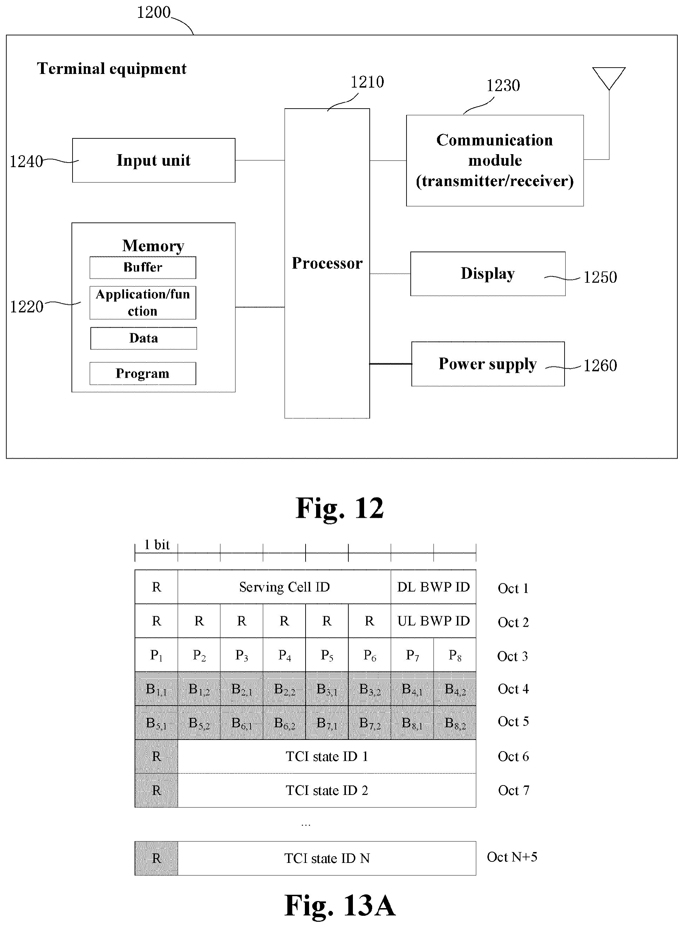

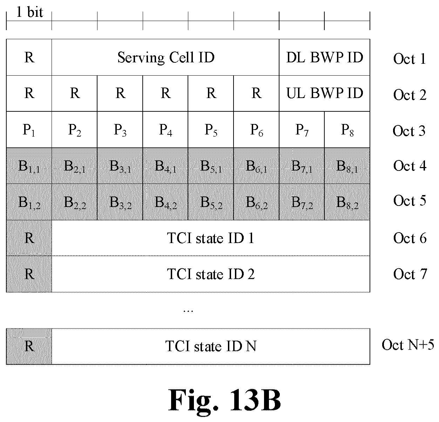

For example, the first MAC CE is any one of the MAC CEs shown in FIG. 5A, FIG. 5B, FIG. 5C, FIG. 6A, FIG. 6B, FIG. 6C, FIG. 7A, FIG. 7B, FIG. 7C and FIG. 7D. For example, the second MAC CE is any one of the MAC CEs shown in FIG. 13A and FIG. 13B (a specific format of the second MAC CE shall be described in detail later in this disclosure).

The case where the first MAC CE and the second MAC CE are different shall be described below.

In some embodiments, in the case where the value of parameter unifiedTCI-StateType is 'separate', the first indication is carried by the first MAC CE.

For example, taking that the first MAC CE is the MAC CE shown in FIG. 5A or FIG. 5B as an example, as shown in FIG. 5A or FIG. 5B, the whole field "Bi,1, Bi,2, Bi,3, Bi,4" corresponds to a first subfield of a first field of the first MAC CE, for example, a value range of "i" is "1-8", which corresponds respectively to "i" groups TCI states or corresponds respectively to "i" unified TCI state sets, and "Bi,1, Bi,2, Bi,3, Bi,4" may correspond to an *i-th* TCI codepoint. For example, a value range of "j" in "Bi, j" is "1-4", which correspond respectively to {a first downlink TCI state, a second downlink TCI state, a first uplink TCI state, a second uplink TCI state} in turn; where, each "Bi,1, Bi, 2, Bi, 3, Bi, 4" corresponds to the first subfield on the bitmaps of the first field; wherein fields indicating TCI state identifiers constitute the second field as a whole, such as the fields Oct 8-Oct N+7 shown in FIG. 5A or FIG. 5B; where, a meaning of N is, for example, a total number of TCI states to which the first TRP and the second TRP correspond, for example, a maximum value of N is 32, which is not limited in this disclosure.

For example, the first field shown in FIG. 5A or FIG. 5B corresponds to eight TCI codepoints, wherein a TCI state to which a TCI codepoint i corresponds is determined by a TCI state to which four first subfields in the first field correspond, for example, Bi,1-Bi,4 correspond to TCI states of the TCI codepoint i.

For example, taking an *"i-th"* TCI group as an example, Table 2 shows all possible combinations of TCI states of Bi,1-Bi,4.

**Table 2**

| Sequence number | {Bi,1, Bi,2, Bi,3, Bi,4} | Activated TCI states corresponding to TCI codepoint i |
|---|---|---|
| 1 | 1111 | First downlink TCI state, second downlink TCI state, first uplink TCI state, second uplink TCI state |
| 2 | 1110 | First downlink TCI state, second downlink TCI state, first uplink TCI state |
| 3 | 1110 | First downlink TCI state, second downlink TCI state, second uplink TCI state |
| 4 | 1100 | First downlink TCI state, second downlink TCI state |
| 5 | 1011 | First downlink TCI state, first uplink TCI state, second uplink TCI state |
| 6 | 1010 | First downlink TCI state, first uplink TCI state |
| 7 | 1001 | First downlink TCI state, second uplink TCI state |
| 8 | 1000 | First downlink TCI state |
| 9 | 0111 | Second downlink TCI state, first uplink TCI state, second uplink TCI state |
| 10 | 0110 | Second downlink TCI state, first uplink TCI state |
| 11 | 0101 | Second downlink TCI state, second uplink TCI state |
| 12 | 0100 | Second downlink TCI state |
| 13 | 0011 | First uplink TCI state, second uplink TCI state |
| 14 | 0010 | First uplink TCI state |
| 15 | 0001 | Second uplink TCI state |
| 16 | 0000 | Non-activated TCI states corresponding to TCI codepoint i |

For example, a corresponding relationship between Bi,1, Bi,2, Bi,3, Bi,4 and the first downlink TCI state, the second downlink TCI state, the first uplink TCI state, the second uplink TCI state may be adjusted, and an order of TCIs in the third column of Table 2 is adjusted accordingly after the adjustment, which is not limited in this disclosure.

For example, a first subfield of a second field of the first MAC CE indicates an identification information index of a TCI state(TCI state ID) to which "Bi, j" corresponds. For example, if at least one bit in a corresponding indication bit "Bi,1, Bi,2, Bi,3, Bi,4" is "1", the first subfield of the second field may use 7 bits to indicate the TCI state ID (such as indicating a higher-layer parameter "TCI-StateId"), for example, remaining bits of the second field may be set to be redundant bits (R). For example, as shown in FIG. 5A, the first subfield of the second field starts from a second bit of the second field, and a starting first bit of the second field is set to be a redundant bit. For example, the first subfield of the second field further occupies 6 bits, and so on, which shall not be enumerated herein any further.

For example, as shown in FIG. 5C, when the value of the higher-layer parameter unifiedTCI-StateType is 'separate', the value of the first subfield "B1,1-B1,4" in the first field is "1000", the activated combination of TCI states corresponds to "a first downlink TCI state" in a row where sequence number 8 in Table 2 is located, and then TCI state ID 1 to which "the first downlink TCI state" corresponds is obtained according to the first subfield "TCI state ID 1 (B1,1)" on the second field (Oct 7), wherein (B1,1) in "TCI state ID 1 (B1,1)" in FIG.5C is for better illustrating the corresponding relationship between TCI state IDs and Bi,j, which has no physical significance, that is, a TCI state ID to which B1,1 corresponds is TCI state ID1. For example, the value of the first subfield "B2,1- B2,4" in the first field is "0100", the activated combination of TCI states corresponds to "a second downlink TCI state" in a row where sequence number 12 in Table 2 is located, and then TCI state ID 2 to which "the second downlink TCI state" correspond is obtained according to the first subfield "TCI state ID 2 (B2,2)" on the second field (Oct 8), wherein (B2,2) in "TCI state ID 2 (B2,2) " also has no physical significance. For example, specific values and contents of other fields, such as B3,1 in FIG. 5B, are not enumerated herein any further. For example, X in FIG. 5C is an integer less than or equal to N (corresponding to N in FIG. 5A), which denotes a maximum index of a corresponding TCI state ID in the current activated TCI groups.

For example, in the case where the TCI field indicates "000" (corresponding to TCI codepoint 1), the second indication indicates the terminal equipment to apply "the first downlink TCI state" and the corresponding "TCI state ID 1 (B1,1)", such as applying the corresponding TCI state to the downlink of the first TRP.

Thus, at least one unified TCI state set and the TCI states in the at least one unified TCI state set in the multi-TRP scenario may be determined.

In some embodiments, in the case where the value of the configuration information is 'joint', the first indication information indicates the at least one unified TCI state set via a ninth field of the second MAC CE.

For example, the configuration information is the higher-layer parameter unifiedTCI-StateType, and in a case where a value of the parameter unifiedTCI-StateType is 'joint', the first indication information is carried by the second MAC CE.

In some embodiments, the at least one unified TCI state set is indicated by bitmaps of the ninth field.

In some embodiments, the bitmaps of the ninth field are arranged in an order of row first and then column or in an order of column first and then row.

In some embodiments, that the ninth field of the second MAC CE indicates the at least one unified TCI state set includes that: in a case where a first subfield of the bitmaps of the ninth field is of a first value, the first indication information indicates that there exists no corresponding transmission configuration indication state (TCI state) on a tenth field to which the first subfield of the bitmaps of the ninth field corresponds, and in a case where the first subfield of the bitmaps of the ninth field is of a second value, the first indication information indicates that there exists a corresponding transmission configuration indication state (TCI state) on the tenth field to which the first subfield of the bitmaps of the ninth field corresponds.

In some embodiments, in a case where a value of the first subfield of the bitmaps of the ninth field is of a second value, the tenth field corresponding to the first subfield of the bitmaps of the ninth field on the first indication information is read, wherein the first subfield of the tenth field indicates the identification information index of the TCI state.

For example, "the first subfield of the ninth field" occupies one bit or more bits in the first indication information. For example, in a case where "the first subfield of the ninth field" occupies one bit, the "first value" may be "0", and the "second value" may be "1"; in a case where "the first subfield of the ninth field" occupies two bits, the "first value" may be "00", and the "second value" may be a value other than "00"; optionally, in a case where "the first subfield of the ninth field" occupies one bit, the "first value" may be "1", and the "second value" may be "0", and in a case where "the first subfield of the ninth field" occupies two bits, the "first value" may be "11", and the "second value" may be a value other than "11", which is not limited in this disclosure.

Thus, with the design of the second MAC CE, signaling overhead of the MAC CE may further be reduced.

FIG. 13A is even further another exemplary diagram of the first indication information of the embodiments of this disclosure, and FIG. 13B is even still another exemplary diagram of the first indication information of the embodiments of this disclosure. For example, the bitmaps of the ninth field in FIG. 13A are arranged in an order of row first and then column. For example, the bitmaps of the ninth field in FIG. 13B are arranged in an order of column first and then row.

As shown in FIG. 13A or FIG. 13B, the whole field "Bi,1, Bi,2" corresponds to the first subfield of the ninth field, for example, a value range of "i" is "1-8", which corresponds respectively to "i" groups TCI states or corresponds respectively to "i" unified TCI state sets, and "Bi,1, Bi,2" may correspond to an *i-th* TCI codepoint. For example, a value range of "j" in "Bi, j" is "1, 2", which correspond respectively to {a first joint TCI state, a second joint TCI state} in turn; where, each "Bi, 1, Bi, 2" corresponds to the first subfield on the bitmaps of the ninth field; wherein fields indicating TCI state identifiers constitute the tenth field as a whole, such as the fields Oct 8-Oct N+7 shown in FIG. 13A or FIG. 13B; where, a meaning of N is, for example, a total number of TCI states to which the first TRP and the second TRP correspond, for example, a maximum value of N is 32, which is not limited in this disclosure.

In some embodiment, the ninth field corresponds to at least one TCI codepoint, wherein a TCI state to which one TCI codepoint corresponds is determined by a TCI state to which at least one of the first subfields in the ninth field corresponds.

For example, the ninth field shown in FIG. 13A or FIG. 13B corresponds to eight TCI codepoints, wherein a TCI state to which a TCI codepoint i corresponds is determined by a TCI state to which two first subfields in the ninth field correspond, for example, Bi,1-Bi, 2 corresponds to the TCI state of the TCI codepoint i.

For example, taking "i" TCI groups as an example, Table 3 shows all possible combinations of TCI states of Bi,1-Bi,2.

**Table 3**

| Sequence number | {Bi,1, Bi,2} | Activated TCI states corresponding to TCI codepoint i |
|---|---|---|
| 1 | 11 | First joint TCI state, second joint TCI state |
| 2 | 10 | First joint TCI state |
| 3 | 01 | Second joint TCI state |
| 4 | 00 | Non-activated TCI states corresponding to TCI codepoint i |

For example, a corresponding relationship between Bi,1, Bi,2 and the first joint TCI state, the second joint TCI state may be adjusted, and an order of TCIs in the third column of Table 3 is adjusted accordingly after the adjustment, which is not limited in this disclosure.

In some embodiments, in a case where the value of the first subfield of the bitmaps of the ninth field is of a second value, the tenth field corresponding to the first subfield of the bitmaps of the ninth field on the first indication information is read, wherein the first subfield of the tenth field indicates the identification information index of the TCI state.

For example, the first subfield of the tenth field indicates an identification information index of a TCI state (TCI state ID) to which "Bi,1, Bi,2" corresponds. For example, the first subfield of the tenth field may use 7 bits to indicate the TCI state ID (such as indicating a higher-layer parameter "TCI-StateId"), for example, remaining bits of the tenth field may be set to be redundant bits (R). For example, as shown in FIG. 13A, the first subfield of the ten field starts from a second bit of the tenth field, and a starting first bit of the tenth field is set to be a redundant bit.

For example, the TCI State ID fields in FIG. 13A or FIG. 13B correspond one-to-one to bits with a value of "1" in a "sequence of B1,1, B1,2, B2,1, B2,2, ..., B8,1, B8,2" (hereinafter referred to as a sequence of {Bi,j}. For example, a bit with a value of "1" appeared first in the "sequence of B1,1, B1,2, B2,1, B2,2, ..., B8,1, B8,2" corresponds to a TCI state ID 1, and a bit with a value of "1" appeared second in the "sequence of B1,1, B1,2, B2,1, B2,2, ..., B8,1, B8,2" corresponds to a TCI state ID 2, and so on. For example, if a value of "B1,1, B1,2" in the "sequence of B1,1, B1,2, B2,1, B2,2, ..., B8,1, B8,2" is "00", a value of "B2,1, B2,2, B2,3, B2,4" therein is "00", and a value of "B3,1, B3,2" is "10", a codepoint 3 corresponding to "B3,1, B3,2" corresponds to a first TCI state, i.e. TCI state 1.

Thus, at least one unified TCI state set and the TCI states in the at least one unified TCI state set in the multi-TRP scenario may be determined.

For example, reference may be made to the relevant art for other fields shown in FIG. 13A and FIG. 13B, such as "Serving Cell ID", "DL BWP ID", "UL BWP ID", and "Pi", etc., which are not limited in this disclosure. Moreover, in this disclosure, the first indication information may include all the fields shown in FIG. 13A and FIG. 13B, or may not include some of the fields shown in FIG. 5A, FIG. 13A and FIG. 13B. For example, the first indication information in this disclosure may not include the field "Pi", which is not limited in this disclosure and shall not be enumerated herein any further. The above embodiments only illustrate the embodiments of this disclosure. However, this disclosure is not limited thereto, and appropriate variants may be made on the basis of these embodiments. For example, the above embodiments may be executed separately, or one or more of them may be executed in a combined manner.

It can be seen from the above embodiment that at least one unified TCI state set and TCI states in the at least one unified TCI state set in a multi-TRP scenario may be accurately indicated with a relatively low complexity.

### Embodiments of a second aspect

The embodiments of this disclosure provide a data transmission method, applicable to a network device side. The embodiments of this disclosure may be implemented in combination with the embodiments of the first aspect, or, the embodiments of this disclosure may be implemented separately, with contents identical to those in the embodiments of the first aspect being not going to be described herein any further.

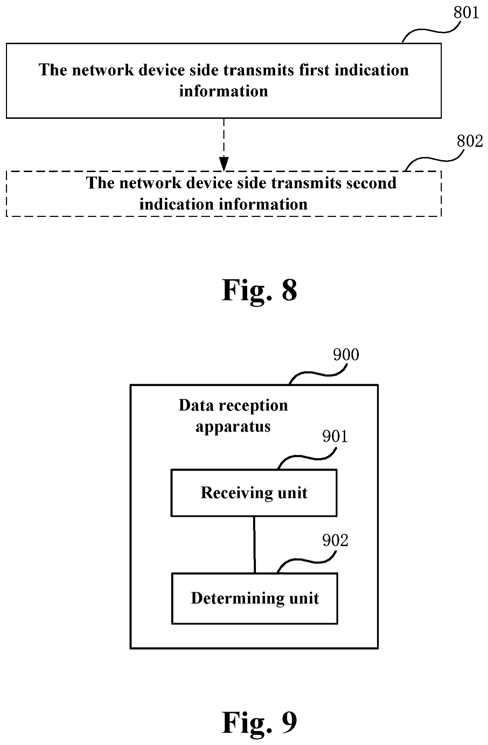

FIG. 8 is a schematic diagram of the data transmission method of the embodiments of this disclosure. As shown in FIG. 8, the method includes:
801: the network device transmits first indication information, wherein the first indication information is used to indicate at least one unified transmission configuration indication (TCI) state set of mTRP; and determining a transmission configuration indication state (TCI state) in the at least one unified transmission configuration indication state (TCI state) set by a terminal equipment according to the first indication information.

Hence, at least one unified TCI state set and TCI states in the at least one unified TCI state set in a multi-TRP scenario may be accurately indicated with a relatively low complexity.

In some embodiments, the method further includes:
802: the network device transmits second indication information, wherein the second indication information indicates an applied TCI state according to a TCI state determined by the first indication information.

It should be noted that FIG. 8 only schematically illustrates the embodiments of this disclosure; however, this disclosure is not limited thereto. For example, an order of execution of the operations may be appropriately adjusted, and furthermore, some other operations may be added, or some operation therein may be reduced. And appropriate variants may be made by those skilled in the art according to the above contents, without being limited to what is contained in FIG. 8.

The above embodiments only illustrate the embodiments of this disclosure. However, this disclosure is not limited thereto, and appropriate variants may be made on the basis of these embodiments. For example, the above embodiments may be executed separately, or one or more of them may be executed in a combined manner.

It can be seen from the above embodiment that at least one unified TCI state set and TCI states in the at least one unified TCI state set in a multi-TRP scenario may be accurately indicated with a relatively low complexity.

### Embodiments of a third aspect

The embodiments of this disclosure provide a data reception apparatus. The apparatus may be, for example, a terminal equipment, or one or some components or assemblies configured in the terminal equipment. Contents in the embodiments identical to those in the embodiments of the first aspect shall not be described herein any further.

FIG. 9 is a schematic diagram of the data reception apparatus of the embodiments of this disclosure. As shown in FIG. 9, the data reception apparatus 900 includes:
a receiving unit 901 configured to receive first indication information, wherein the first indication information is used to indicate at least one unified transmission configuration indication (TCI) state set of multiple transmission and reception points (TRPs); and
a determining unit 902 configured to determine transmission configuration indication states (TCI states) in the at least one unified TCI state set according to the first indication information.

In some embodiments, at least one unified transmission configuration indication state (TCI state) set of one transmission and reception point (TRP) includes at least one of the following combinations of TCI states (TCI states): a first downlink transmission configuration indication state (TCI state), a second downlink transmission configuration indication state (TCI state), a first uplink transmission configuration indication state (TCI state), and a second uplink transmission configuration indication state (TCI state); a first downlink transmission configuration indication state (TCI state), a second downlink transmission configuration indication state (TCI state), and a first uplink transmission configuration indication state (TCI state); a first downlink transmission configuration indication state (TCI state), a second downlink transmission configuration indication state (TCI state), and a second uplink transmission configuration indication state (TCI state); a first downlink transmission configuration indication state (TCI state) and a second downlink transmission configuration indication state (TCI state); a first downlink transmission configuration indication state (TCI state), a first uplink transmission configuration indication state (TCI state), and a second uplink transmission configuration indication state (TCI state); a first downlink transmission configuration indication state (TCI state) and a first uplink transmission configuration indication state (TCI state); a first downlink transmission configuration indication state (TCI state) and a second uplink transmission configuration indication state (TCI state); a first downlink transmission configuration indication state (TCI state); a second downlink transmission configuration indication state (TCI state), a first uplink transmission configuration indication state (TCI state), and a second uplink transmission configuration indication state (TCI state); a second downlink transmission configuration indication state (TCI state) and a first uplink transmission configuration indication state (TCI state); a second downlink transmission configuration indication state (TCI state) and a second uplink transmission configuration indication state (TCI state); a second downlink transmission configuration indication state (TCI state); a first uplink transmission configuration indication state (TCI state) and a second uplink transmission configuration indication state (TCI state); a first uplink transmission configuration indication state (TCI state); a second uplink transmission configuration indication state (TCI state); a first joint transmission configuration indication state (TCI state) and a second joint transmission configuration indication state (TCI state); a first joint transmission configuration indication state (TCI state); or, a second joint transmission configuration indication state (TCI state).

In some embodiments, the first indication information is carried by a media access control control element (MAC CE).

In some embodiments, the first indication information indicates the at least one unified transmission configuration indication (TCI) state set via a first field, wherein the at least one unified transmission configuration indication (TCI) state set is indicated via bitmaps of the first field.

In some embodiments, the bitmaps of the first field are arranged in an order of row first and then column or an order of column first and then row.

In some embodiments, that the at least one unified transmission configuration indication (TCI) state set is indicated via bitmaps of the first field includes that: in a case where a first subfield of the bitmaps of the first field is of a first value, the first indication information indicates that there exists no corresponding transmission configuration indication state (TCI state) on a second field to which the first subfield of the bitmaps of the first field corresponds; and in a case where the first subfield of the bitmaps of the first field is of a second value, the first indication information indicates that there exists a corresponding transmission configuration indication state (TCI state) on the second field to which the first subfield of the bitmaps of the first field corresponds.

In some embodiments, in the case where the first subfield of the bitmaps of the first field is of the second value, the determining unit 902 reads the second field on the first indication information corresponding to the first subfield of the bitmaps of the first field, wherein a first subfield of the second field indicates an identification information index of the transmission configuration indication state (TCI state).

In some embodiments, the first field corresponds to at least one transmission configuration indication codepoint (TCI codepoint), wherein a transmission configuration indication state (TCI state) to which one transmission configuration indication codepoint (TCI codepoint) corresponds is determined by a transmission configuration indication state (TCI state) to which at least one first subfield in the first field corresponds.

In some embodiments, the first indication information indicates the at least one unified TCI state set via a third field and a fourth field, wherein the at least one unified TCI state set is indicated by bitmaps of the third field and a first subfield of the fourth field jointly.

In some embodiment, the bitmaps of the third field are arranged in an order of row first and then column or in an order of column first and then row; and the first subfield of the fourth field is at least one starting bit of the fourth field.

In some embodiment, that the at least one unified TCI state set is indicated by bitmaps of the third field and a first subfield of the fourth field jointly includes that: when the first subfield on the bitmaps of the third field is of a first value, the first indication indicates that there is no corresponding TCI state on the second subfield of the fourth field to which the first subfield on the bitmaps of the third field corresponds, and when the first subfield on the bitmaps of the third field is of a second value, the first indication indicates that there is a corresponding TCI state on the second subfield of the fourth field to which the first subfield on the bitmaps of the third field corresponds; and/or, when the first subfield of the fourth field is of a first value, the first indication indicates that there is no corresponding TCI state on the second subfield of the fourth field to which the first subfield of the fourth field corresponds, and when the first subfield of the fourth field is of a second value, the first indication indicates that there is a corresponding TCI state on the second subfield of the fourth field to which the first subfield of the fourth field corresponds.

In some embodiment, in the case where the first subfield on the bitmaps of the third field is of a second value and/or the first subfield of the fourth field is of a second value, the determining unit 902 reads the second subfield of the fourth field to which the first subfield on the bitmaps of the third field corresponds and/or reads the second subfield of the fourth field to which the first subfield of the fourth field corresponds, wherein the second subfield of the fourth field indicates an identification information index of the TCI state.

In some embodiments, the third field and the fourth field correspond to at least one transmission configuration indication (TCI) codepoint, wherein a TCI state to one TCI codepoint corresponds is determined by the TCI state to which the first subfield of the third field corresponds and/or the TCI state to which the first subfield of the fourth field corresponds.

In some embodiments, the first indication information indicates the at least one unified transmission configuration indication (TCI) state set via a fifth field and a sixth field.

In some embodiments, that the first indication information indicates the at least one unified transmission configuration indication (TCI) state set via a fifth field and a sixth field includes that: in a case where a first subfield on bitmaps of the fifth field is of a first value, the first indication information indicates that there exist a first number of transmission configuration indication states (TCI states) on a seventh field to which the first subfield on the bitmaps of the fifth field corresponds; and in a case where the first subfield on the bitmaps of the fifth field is of a second value, the first indication information indicates that there exist a second number of transmission configuration indication states (TCI states) on the seventh field to which the first subfield on the bitmaps of the fifth field corresponds.

In some embodiments, the determining unit 902 reads the seventh field on the first indication information corresponding to the first subfield on the bitmaps of the fifth field, wherein the first subfield of the seventh field indicates an uplink direction or a downlink direction or a joint state, and a second subfield of the seventh field indicates the identification information index of the transmission configuration indication state (TCI state).

In some embodiments, that the first indication information indicates the at least one unified transmission configuration indication (TCI) state set via a fifth field and a sixth field includes that: in a case where a first subfield on bitmaps of the sixth field is of a first value, the first indication information indicates that there exist a first number of transmission configuration indication states (TCI states) on an eighth field to which the first subfield on the bitmaps of the sixth field corresponds; and in a case where the first subfield on bitmaps of the sixth field is of a second value, the first indication information indicates that there exist a second number of transmission configuration indication states (TCI states) on the eighth field to which the first subfield on the bitmaps of the sixth field corresponds.

In some embodiments, the determining unit 902 reads a first subfield and a second subfield of the eighth field on the first indication information corresponding to the first subfield on the bitmaps of the sixth field, wherein the first subfield of the eighth field indicates an uplink direction or a downlink direction or a joint state, and the second subfield of the eighth field indicates the identification information index of the transmission configuration indication state (TCI state).

In some embodiments, the receiving unit 901 further receives second indication information, wherein the second indication information indicates an applied transmission configuration indication state (TCI state) according to the transmission configuration indication state (TCI state) determined by the first indication information; wherein the second indication information is carried by downlink control information (DCI).

In some embodiments, that the first indication information is carried by a media access control control element (MAC CE) includes that: the media access control control element (MAC CE) comprises a first media access control control element (MAC CE) and/or a second media access control control element (MAC CE).

In some embodiments, the receiving unit 901 further receives configuration information, and in a case where a value of the configuration information is 'separate', the first indication information is carried by the first media access control control element (MAC CE), and in a case where a value of the configuration information is 'joint', the first indication information is carried by the second media access control control element (MAC CE).

In some embodiments, in the case where the value of the configuration information is 'joint', the first indication information indicates the at least one unified TCI state set via a ninth field of the second media access control control element (MAC CE), wherein the at least one unified TCI state set is indicated by bitmaps of the ninth field.

In some embodiments, the bitmaps of the ninth field are arranged in an order of row first and then column or in an order of column first and then row.

In some embodiments, that the first indication information indicates the at least one unified TCI state set via the ninth field of the second MAC CE includes that: in a case where a first subfield of the bitmaps of the ninth field is of a first value, the first indication information indicates that there exists no corresponding transmission configuration indication state (TCI state) on a tenth field to which the first subfield of the bitmaps of the ninth field corresponds, and in a case where the first subfield of the bitmaps of the ninth field is of a second value, the first indication information indicates that there exists a corresponding transmission configuration indication state (TCI state) on the tenth field to which the first subfield of the bitmaps of the ninth field corresponds.

In some embodiments, in a case where a value of the first subfield of the bitmaps of the ninth field is of a second value, the tenth field corresponding to the first subfield of the bitmaps of the ninth field on the first indication information is read, wherein the first subfield of the tenth field indicates the identification information index of the TCI state.

In some embodiments, the ninth field corresponds to at least one transmission configuration indication codepoint (TCI codepoint), wherein a transmission configuration indication state (TCI state) to which one transmission configuration indication codepoint (TCI codepoint) corresponds is determined by a transmission configuration indication state (TCI state) to which at least one first subfield in the ninth field corresponds.

The above embodiments only illustrate the embodiments of this disclosure. However, this disclosure is not limited thereto, and appropriate variants may be made on the basis of these embodiments. For example, the above embodiments may be executed separately, or one or more of them may be executed in a combined manner.

It should be noted that the components or modules related to this disclosure are only described above. However, this disclosure is not limited thereto, and the data reception apparatus 900 may further include other components or modules, and reference may be made to related techniques for particulars of these components or modules.

Furthermore, for the sake of simplicity, connection relationships between the components or modules or signal profiles thereof are only illustrated in FIG. 9. However, it should be understood by those skilled in the art that such related techniques as bus connection, etc., may be adopted. And the above components or modules may be implemented by hardware, such as a processor, a memory, a transmitter, and a receiver, etc., which are not limited in the embodiments of this disclosure.

It can be seen from the above embodiment that at least one unified TCI state set and TCI states in the at least one unified TCI state set in a multi-TRP scenario may be accurately indicated with a relatively low complexity.

### Embodiments of a fourth aspect

The embodiments of this disclosure provide a data transmission apparatus. The apparatus may be, for example, a network device, or one or some components or assemblies configured in the network device. Contents in the embodiments identical to those in the embodiments of the first aspect shall not be described herein any further.

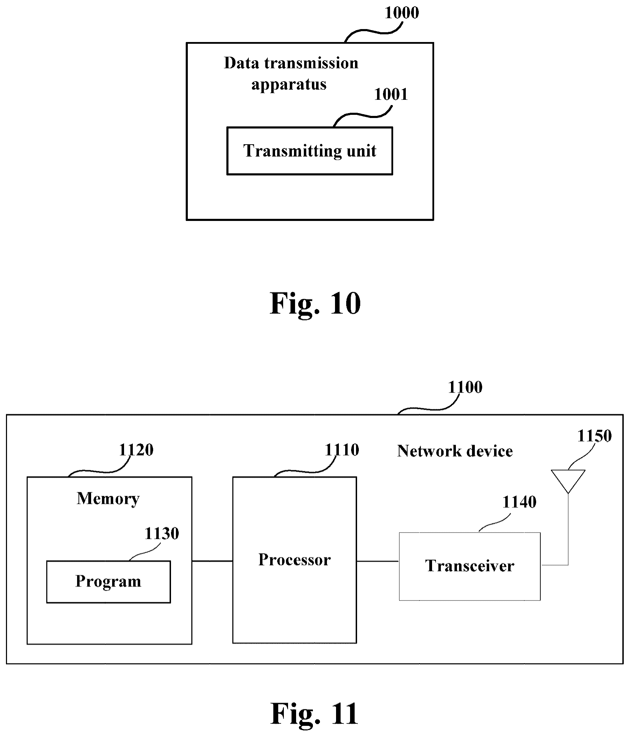

FIG. 10 is a schematic diagram of the data transmission apparatus of the embodiments of this disclosure. As shown in FIG. 10, the data transmission apparatus 1000 includes:
a transmitting unit 1001 configured to transmit first indication information, wherein the first indication information is used to indicate at least one unified transmission configuration indication (TCI) state set of multiple transmission and reception points (TRPs); wherein a terminal equipment determines a transmission configuration indication state (TCI state) in the at least one unified transmission configuration indication state (TCI state) set according to the first indication information.

Thus, at least one unified TCI state set and the TCI states in the at least one unified TCI state set in the multi-TRP scenario may be determined.

In some embodiments, the transmitting unit 1001 further transmits second indication information, wherein the second indication information indicates an applied TCI state according to a TCI state determined by the first indication information.

The above embodiments only illustrate the embodiments of this disclosure. However, this disclosure is not limited thereto, and appropriate variants may be made on the basis of these embodiments. For example, the above embodiments may be executed separately, or one or more of them may be executed in a combined manner.

It should be noted that the components or modules related to this disclosure are only described above. However, this disclosure is not limited thereto, and the data transmission apparatus 1000 may further include other components or modules, and reference may be made to related techniques for particulars of these components or modules.

Furthermore, for the sake of simplicity, connection relationships between the components or modules or signal profiles thereof are only illustrated in FIG. 10. However, it should be understood by those skilled in the art that such related techniques as bus connection, etc., may be adopted. And the above components or modules may be implemented by hardware, such as a processor, a memory, a transmitter, and a receiver, etc., which are not limited in the embodiments of this disclosure.

It can be seen from the above embodiment that at least one unified TCI state set and TCI states in the at least one unified TCI state set in a multi-TRP scenario may be accurately indicated with a relatively low complexity.

### Embodiments of a fifth aspect

The embodiments of this disclosure provide a communication system, and reference may be made to FIG. 1, with contents identical to those in the embodiments of the first to the fourth aspects being not going to be described herein any further.

In some embodiments, the communication system100 may at least include:
a network device configured to transmit first indication information; and
a terminal equipment configured to receive first indication information, wherein the first indication information is used to indicate at least one unified transmission configuration indication (TCI) state set of multiple transmission and reception points (TRPs), and determine transmission configuration indication states (TCI states) in the at least one unified TCI state set according to the first indication information.

The embodiments of this disclosure further provide a network device, which may be, for example, a base station. However, this disclosure is not limited thereto, and it may also be another network device.

FIG. 11 is a schematic diagram of a structure of the network device of the embodiments of this disclosure. As shown in FIG. 11, the network device 1100 may include a processor 1110 (such as a central processing unit (CPU)) and a memory 1120, the memory 1120 being coupled to the processor 1110. Wherein, the memory 1120 may store various data, and furthermore, it may store a program1130 for information processing, and execute the program under control of the processor 1110.

Furthermore, as shown in FIG. 11, the network device 1100 may include a transceiver 1140, and an antenna 1150, etc. Functions of the above components are similar to those in the relevant art, and shall not be described herein any further. It should be noted that the network device 1100 does not necessarily include all the parts shown in FIG. 11, and furthermore, the network device 1100 may include parts not shown in FIG. 11, and the relevant art may be referred to.

The embodiments of this disclosure further provide a terminal equipment; however, this disclosure is not limited thereto, and it may also be another equipment.

FIG. 12 is a schematic diagram of the terminal equipment of the embodiments of this disclosure. As shown in FIG. 12, the terminal equipment 1200 may include a processor 1210 and a memory 1220, the memory 1220 storing data and a program and being coupled to the processor 1210. It should be noted that this figure is illustrative only, and other types of structures may also be used, so as to supplement or replace this structure and achieve a telecommunications function or other functions.

For example, the processor 1210 may be configured to execute a program to carry out the data reception method as described in the embodiments of the first aspect. For example, the processor 1201 may be configured to execute the following control: receiving first indication information, wherein the first indication information is used to indicate at least one unified transmission configuration indication (TCI) state set of multiple transmission and reception points (TRPs); and determining transmission configuration indication states (TCI states) in the at least one unified TCI state set according to the first indication information.

As shown in FIG. 12, the terminal equipment 1200 may further include a communication module 1230, an input unit 1240, a display 1250, and a power supply 1260; wherein functions of the above components are similar to those in the relevant art, which shall not be described herein any further. It should be noted that the terminal equipment 1200 does not necessarily include all the parts shown in FIG. 12, and the above components are not necessary. Furthermore, the terminal equipment 1200 may include parts not shown in FIG. 12, and the relevant art may be referred to.

Embodiments of this disclosure provide a computer program, which, when executed in a terminal equipment, will cause the terminal equipment to carry out the data reception method as described in the embodiments of the first aspect.

Embodiments of this disclosure provide a computer medium, including a computer program, which will cause a terminal equipment to carry out the data reception method as described in the embodiments of the first aspect.

Embodiments of this disclosure provide a computer program, which, when executed in a network device, will cause the network device to carry out the data transmission method as described in the embodiments of the second aspect.

Embodiments of this disclosure provide a computer medium, including a computer program, which will cause a network device to carry out the data transmission method as described in the embodiments of the second aspect.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. Such software modules may respectively correspond to the steps shown in the drawings. And the hardware module, for example, may be carried out by firming the soft modules by using a field programmable gate array (FPGA).

The soft modules may be located in an RAM, a flash memory, an ROM, an EPROM, and EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile termination, and may also be stored in a memory card of a pluggable mobile termination. For example, if equipment (such as a mobile termination) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of the present invention. Various variants and modifications may be made by those skilled in the art according to the spirits and principle of the present invention, and such variants and modifications fall within the scope of the present invention.

As to embodiments containing the above embodiments, following supplements are further disclosed.
1. A data reception method, applicable to a terminal equipment, the data reception method including:
   receiving first indication information, wherein the first indication information is used to indicate at least one unified transmission configuration indication (TCI) state set of multiple transmission and reception points (TRPs); and
   determining transmission configuration indication states (TCI states) in the at least one unified TCI state set according to the first indication information.
2. The method according to supplement 1, wherein at least one unified transmission configuration indication state (TCI state) set of one transmission and reception point (TRP) includes at least one of the following combinations of TCI states (TCI states):
   a first downlink TCI state, a second downlink TCI state, a first uplink TCI state, and a second uplink TCI state;
   a first downlink TCI state, a second downlink TCI state, and a first uplink TCI state;
   a first downlink TCI state, a second downlink TCI state, and a second uplink TCI state;
   a first downlink TCI state and a second downlink TCI state;
   a first downlink TCI state, a first uplink TCI state, and a second uplink TCI state;
   a first downlink TCI state and a first uplink TCI state;
   a first downlink TCI state and a second uplink TCI state;
   a first downlink TCI state;
   a second downlink TCI state, a first uplink TCI state, and a second uplink TCI state;
   a second downlink TCI state and a first uplink TCI state;
   a second downlink TCI state and a second uplink TCI state;
   a second downlink TCI state;
   a first uplink TCI state and a second uplink TCI state;
   a first uplink TCI state;
   a second uplink TCI state;
   a first joint TCI state and a second joint TCI state;
   a first joint TCI state; or
   a second joint TCI state.
3. The method according to supplement 2, wherein the first indication information is carried by an MAC CE.
4. The method according to supplement 3, wherein the method further includes:
   indicating the at least one unified transmission configuration indication (TCI) state set by the first indication information via a first field.
5. The method according to supplement 4, wherein the at least one unified transmission configuration indication (TCI) state set is indicated via bitmaps of the first field.
6. The method according to supplement 5, wherein the bitmaps of the first field are arranged in an order of row first and then column or an order of column first and then row.
7. The method according to supplement 5, wherein that the at least one unified transmission configuration indication (TCI) state set is indicated via bitmaps of the first field includes that:
   in a case where a first subfield of the bitmaps of the first field is of a first value, the first indication information indicates that there exists no corresponding TCI state on a second field to which the first subfield of the bitmaps of the first field corresponds; and
   in a case where the first subfield of the bitmaps of the first field is of a second value, the first indication information indicates that there exists a corresponding TCI state on the second field to which the first subfield of the bitmaps of the first field corresponds.
8. The method according to supplement 7, wherein in the case where the first subfield of the bitmaps of the first field is of the second value, the second field on the first indication information corresponding to the first subfield of the bitmaps of the first field is read, wherein a first subfield of the second field indicates an identification information index of the TCI state.
9. The method according to any one of supplements 4-8, wherein the first field corresponds to at least one TCI codepoint, wherein a TCI state to which one TCI codepoint corresponds is determined by a TCI state to which at least one first subfield in the first field corresponds.
10. The method according to supplement 3, wherein the method further includes:
   indicating the at least one unified TCI state set by the first indication information via a third field and a fourth field.
11. The method according to supplement 10, wherein the at least one unified TCI state set is indicated by bitmaps of the third field and a first subfield of the fourth field jointly.
12. The method according to supplement 11, wherein the bitmaps of the third field are arranged in an order of row first and then column or in an order of column first and then row;
   and the first subfield of the fourth field is at least one starting bit of the fourth field.
13. The method according to supplement 12, wherein that the at least one unified TCI state set is indicated by bitmaps of the third field and a first subfield of the fourth field jointly includes that:
   when the first subfield on the bitmaps of the third field is of a first value, the first indication indicates that there is no corresponding TCI state on the second subfield of the fourth field to which the first subfield on the bitmaps of the third field corresponds;
   when the first subfield on the bitmaps of the third field is of a second value, the first indication indicates that there is a corresponding TCI state on the second subfield of the fourth field to which the first subfield on the bitmaps of the third field corresponds; and/or,
   when the first subfield of the fourth field is of a first value, the first indication indicates that there is no corresponding TCI state on the second subfield of the fourth field to which the first subfield of the fourth field corresponds;
   and when the first subfield of the fourth field is of a second value, the first indication indicates that there is a corresponding TCI state on the second subfield of the fourth field to which the first subfield of the fourth field corresponds.
14. The method according to supplement 13, wherein in the case where the first subfield on the bitmaps of the third field is of a second value and/or the first subfield of the fourth field is of a second value, the second subfield of the fourth field to which the first subfield on the bitmaps of the third field corresponds is read and/or the second subfield of the fourth field to which the first subfield of the fourth field corresponds is read, wherein the second subfield of the fourth field indicates an identification information index of the TCI state.
15. The method according to any one of supplements 11-14, wherein the third field and the fourth field correspond to at least one TCI codepoint, wherein a TCI state to one TCI codepoint corresponds is determined by the TCI state to which the first subfield of the third field corresponds and/or the TCI state to which the first subfield of the fourth field corresponds.
16. The method according to supplement 1, wherein the method further includes:
   indicating the at least one unified TCI state set by the first indication information via a fifth field and a sixth field.
17. The method according to supplement 16, wherein the indicating the at least one unified transmission configuration indication (TCI) state set by the first indication information via a fifth field and a sixth field includes:
   in a case where a first subfield on bitmaps of the fifth field is of a first value, indicating by the first indication information that there exist a first number of TCI states on a seventh field to which the first subfield on the bitmaps of the fifth field corresponds; and
   in a case where the first subfield on the bitmaps of the fifth field is of a second value, indicating by the first indication information that there exist a second number of TCI states on the seventh field to which the first subfield on the bitmaps of the fifth field corresponds.
18. The method according to supplement 17, wherein the method further includes: reading the seventh field on the first indication information corresponding to the first subfield on the bitmaps of the fifth field, wherein the first subfield of the seventh field indicates an uplink direction or a downlink direction or a joint state, and a second subfield of the seventh field indicates an identification information index of the TCI state.
19. The method according to supplement 16, wherein the indicating the at least one unified TCI state set by the first indication information via a fifth field and a sixth field includes:
   in a case where a first subfield on bitmaps of the sixth field is of a first value, indicating by the first indication information that there exist a first number of TCI states on an eighth field to which the first subfield on the bitmaps of the sixth field corresponds; and
   in a case where the first subfield on bitmaps of the sixth field is of a second value, indicating by the first indication information that there exist a second number of TCI states on the eighth field to which the first subfield on the bitmaps of the sixth field corresponds.
20. The method according to supplement 17, wherein the method further includes:
   reading a first subfield and a second subfield of the eighth field on the first indication information corresponding to the first subfield on the bitmaps of the sixth field, wherein the first subfield of the eighth field indicates an uplink direction or a downlink direction or a joint state, and the second subfield of the eighth field indicates an identification information index of the TCI state.
21. The method according to any one of supplements 1-20, wherein the method further includes:
   receiving second indication information, wherein the second indication information indicates an applied TCI state according to the TCI state determined by the first indication information.
22. The method according to supplement 21, wherein the second indication information is carried by DCI.
23. The method according to supplement 3, wherein that the first indication information is carried by an MAC CE includes that: the MAC CE includes a first MAC CE and/or a second MAC CE.
24. The method according to supplement 23, wherein the method further includes:
   receiving configuration information,
   wherein in a case where a value of the configuration information is 'separate', the first indication information is carried by the first MAC CE, and in a case where a value of the configuration information is 'joint', the first indication information is carried by the second MAC CE.
25. The method according to supplement 24, wherein in the case where the value of the configuration information is 'joint', the first indication information indicates the at least one unified TCI state set via a ninth field of the second MAC CE.
26. The method according to supplement 25, wherein the at least one unified TCI state set is indicated by bitmaps of the ninth field.
27. The method according to supplement 26, wherein the bitmaps of the ninth field are arranged in an order of row first and then column or in an order of column first and then row.
28. The method according to supplement 27, wherein that the first indication information indicates the at least one unified TCI state set via the ninth field of the second MAC CE includes that:
   in a case where a first subfield of the bitmaps of the ninth field is of a first value, the first indication information indicates that there exists no corresponding TCI state on a tenth field to which the first subfield of the bitmaps of the ninth field corresponds,
   and in a case where the first subfield of the bitmaps of the ninth field is of a second value, the first indication information indicates that there exists a corresponding TCI state on the tenth field to which the first subfield of the bitmaps of the ninth field corresponds.
29. The method according to supplement 28, wherein in a case where a value of the first subfield of the bitmaps of the ninth field is of a second value, the tenth field corresponding to the first subfield of the bitmaps of the ninth field on the first indication information is read, wherein the first subfield of the tenth field indicates an identification information index of the TCI state.
30. The method according to any one of supplements 26-29, wherein the ninth field corresponds to at least one TCI codepoint, wherein a TCI state to which one TCI codepoint corresponds is determined by a TCI state to which at least one first subfield in the ninth field corresponds.
31. A data transmission method, applicable to a network device, wherein the method includes:
   transmitting first indication information, wherein the first indication information is used to indicate at least one unified TCI state set of multiple transmission and reception points (mTRP); and
   determining a TCI state in the at least one unified TCI state set by a terminal equipment according to the first indication information.
32. The method according to supplement 31, wherein the method further includes:
   transmitting second indication information, wherein the second indication information indicates an applied TCI state according to a TCI state determined by the first indication information.
33. A terminal equipment, including a memory and a processor, the memory storing a computer program, and the processor being configured to execute the computer program to carry out the data reception method as described in any one of supplements 1-30.
34. A network device, including a memory and a processor, the memory storing a computer program, and the processor being configured to execute the computer program to carry out the data transmission method as described in either one of supplements 31-32.
35. A communication system, including:
   a network device configured to transmit first indication information; and
   a terminal equipment configured to receive first indication information, wherein the first indication information is used to indicate at least one unified TCI state set of multiple TRPs, and determine TCI states in the at least one unified TCI state set according to the first indication information.

## Claims

1. A data reception apparatus, configured in a terminal equipment, the data reception apparatus comprising:
a receiving unit configured to receive first indication information, wherein the first indication information is used to indicate at least one unified transmission configuration indication (TCI) state set of multiple transmission and reception points (TRPs); and
a determining unit configured to determine transmission configuration indication states (TCI states) in the at least one unified TCI state set according to the first indication information.

2. The apparatus according to claim 1, wherein at least one unified transmission configuration indication state (TCI state set of one transmission and reception point (TRP) comprises at least one of the following combinations of TCI states (TCI states):
a first downlink transmission configuration indication state (TCI state), a second downlink transmission configuration indication state (TCI state), a first uplink transmission configuration indication state (TCI state), and a second uplink transmission configuration indication state (TCI state);
a first downlink transmission configuration indication state (TCI state), a second downlink transmission configuration indication state (TCI state), and a first uplink transmission configuration indication state (TCI state);
a first downlink transmission configuration indication state (TCI state), a second downlink transmission configuration indication state (TCI state), and a second uplink transmission configuration indication state (TCI state);
a first downlink transmission configuration indication state (TCI state) and a second downlink transmission configuration indication state (TCI state);
a first downlink transmission configuration indication state (TCI state), a first uplink transmission configuration indication state (TCI state), and a second uplink transmission configuration indication state (TCI state);
a first downlink transmission configuration indication state (TCI state) and a first uplink transmission configuration indication state (TCI state);
a first downlink transmission configuration indication state (TCI state) and a second uplink transmission configuration indication state (TCI state);
a first downlink transmission configuration indication state (TCI state);
a second downlink transmission configuration indication state (TCI state), a first uplink transmission configuration indication state (TCI state), and a second uplink transmission configuration indication state (TCI state);
a second downlink transmission configuration indication state (TCI state) and a first uplink transmission configuration indication state (TCI state);
a second downlink transmission configuration indication state (TCI state) and a second uplink transmission configuration indication state (TCI state);
a second downlink transmission configuration indication state (TCI state);
a first uplink transmission configuration indication state (TCI state) and a second uplink transmission configuration indication state (TCI state);
a first uplink transmission configuration indication state (TCI state);
a second uplink transmission configuration indication state (TCI state);
a first joint transmission configuration indication state (TCI state) and a second joint transmission configuration indication state (TCI state);
a first joint transmission configuration indication state (TCI state); or
a second joint transmission configuration indication state (TCI state).

3. The apparatus according to claim 2, wherein the first indication information is carried by a media access control control element (MAC CE).

4. The apparatus according to claim 3, wherein the first indication information indicates the at least one unified transmission configuration indication (TCI) state set via a first field,
wherein the at least one unified transmission configuration indication (TCI) state set is indicated via bitmaps of the first field.

5. The apparatus according to claim 4, wherein the bitmaps of the first field are arranged in an order of row first and then column or an order of column first and then row.

6. The apparatus according to claim 5, wherein that the at least one unified transmission configuration indication (TCI) state set is indicated via bitmaps of the first field comprises that:
in a case where a first subfield of the bitmaps of the first field is of a first value, the first indication information indicates that there exists no corresponding transmission configuration indication state (TCI state) on a second field to which the first subfield of the bitmaps of the first field corresponds; and
in a case where the first subfield of the bitmaps of the first field is of a second value, the first indication information indicates that there exists a corresponding transmission configuration indication state (TCI state) on the second field to which the first subfield of the bitmaps of the first field corresponds.

7. The apparatus according to claim 6, wherein in the case where the first subfield of the bitmaps of the first field is of the second value, the determining unit reads the second field on the first indication information corresponding to the first subfield of the bitmaps of the first field, wherein a first subfield of the second field indicates an identification information index of the transmission configuration indication state (TCI state).

8. The apparatus according to claim 7, wherein the first field corresponds to at least one transmission configuration indication codepoint (TCI codepoint), wherein a transmission configuration indication state (TCI state) to which one transmission configuration indication codepoint (TCI codepoint) corresponds is determined by a transmission configuration indication state (TCI state) to which at least one first subfield in the first field corresponds.

9. The apparatus according to claim 1, wherein the first indication information indicates the at least one unified transmission configuration indication (TCI) state set via a fifth field and a sixth field.

10. The apparatus according to claim 9, wherein that the first indication information indicates the at least one unified transmission configuration indication (TCI) state set via a fifth field and a sixth field comprises that:
in a case where a first subfield on bitmaps of the fifth field is of a first value, the first indication information indicates that there exist a first number of transmission configuration indication states (TCI states) on a seventh field to which the first subfield on the bitmaps of the fifth field corresponds; and
in a case where the first subfield on the bitmaps of the fifth field is of a second value, the first indication information indicates that there exist a second number of transmission configuration indication states (TCI states) on the seventh field to which the first subfield on the bitmaps of the fifth field corresponds.

11. The apparatus according to claim 10, wherein the determining unit reads the seventh field on the first indication information corresponding to the first subfield on the bitmaps of the fifth field, wherein the first subfield of the seventh field indicates an uplink direction or a downlink direction or a joint state, and a second subfield of the seventh field indicates an identification information index of the transmission configuration indication state (TCI state).

12. The apparatus according to claim 9, wherein that the first indication information indicates the at least one unified transmission configuration indication (TCI) state set via a fifth field and a sixth field comprises that:
in a case where a first subfield on bitmaps of the sixth field is of a first value, the first indication information indicates that there exist a first number of transmission configuration indication states (TCI states) on an eighth field to which the first subfield on the bitmaps of the sixth field corresponds; and
in a case where the first subfield on bitmaps of the sixth field is of a second value, the first indication information indicates that there exist a second number of transmission configuration indication states (TCI states) on the eighth field to which the first subfield on the bitmaps of the sixth field corresponds.

13. The apparatus according to claim 12, wherein the determining unit reads a first subfield and a second subfield of the eighth field on the first indication information corresponding to the first subfield on the bitmaps of the sixth field, wherein the first subfield of the eighth field indicates an uplink direction or a downlink direction or a joint state, and the second subfield of the eighth field indicates an identification information index of the transmission configuration indication state (TCI state).

14. The apparatus according to claim 1, wherein the receiving unit further receives second indication information, wherein the second indication information indicates an applied transmission configuration indication state (TCI state) according to the transmission configuration indication state (TCI state) determined by the first indication information;
wherein the second indication information is carried by downlink control information (DCI).

15. The apparatus according to claim 3, wherein that the first indication information is carried by a media access control control element (MAC CE) comprises that: the media access control control element (MAC CE) comprises a first media access control control element (MAC CE) and/or a second media access control control element (MAC CE).

16. The apparatus according to claim 15, wherein the receiving unit further receives configuration information, and in a case where a value of the configuration information is 'separate', the first indication information is carried by the first media access control control element (MAC CE), and in a case where a value of the configuration information is 'joint', the first indication information is carried by the second media access control control element (MAC CE).

17. The apparatus according to claim 15, wherein in the case where the value of the configuration information is 'joint', the first indication information indicates the at least one unified TCI state set via a ninth field of the second media access control control element (MAC CE), wherein the at least one unified TCI state set is indicated by bitmaps of the ninth field;
wherein in a case where a first subfield of the bitmaps of the ninth field is of a first value, the first indication information indicates that there exists no corresponding transmission configuration indication state (TCI state) on a tenth field to which the first subfield of the bitmaps of the ninth field corresponds, and in a case where the first subfield of the bitmaps of the ninth field is of a second value, the first indication information indicates that there exists a corresponding transmission configuration indication state (TCI state) on the tenth field to which the first subfield of the bitmaps of the ninth field corresponds;
wherein the bitmaps of the ninth field are arranged in an order of row first and then column or an order of column first and then row.

18. The apparatus according to claim 17, wherein in the case where the first subfield of the bitmaps of the ninth field is of the second value, the tenth field on the first indication information corresponding to the first subfield of the bitmaps of the ninth field is read, wherein a first subfield of the tenth field indicates an identification information index of the transmission configuration indication state (TCI state).

19. The apparatus according to claim 18, wherein the ninth field corresponds to at least one transmission configuration indication codepoint (TCI codepoint), wherein a transmission configuration indication state (TCI state) to which one transmission configuration indication codepoint (TCI codepoint) corresponds is determined by a transmission configuration indication state (TCI state) to which at least one first subfield in the ninth field corresponds.

20. A data transmission apparatus, configured in a network device, wherein the data transmission apparatus comprises:
a transmitting unit configured to transmit first indication information, wherein the first indication information is used to indicate at least one unified transmission configuration indication (TCI) state set of multiple transmission and reception points (TRPs);
wherein a terminal equipment determines a transmission configuration indication state (TCI state) in the at least one unified transmission configuration indication state (TCI state) set according to the first indication information.
